# EUROPÄISCHE PATENTSCHRIFT

(11) **EP 3 789 962 B1**
(45) Veröffentlichungstag und Bekanntmachung des Hinweises auf die Patenterteilung: **21.02.2024**
(21) Anmeldenummer: 20204118.2
(22) Anmeldetag: 02.06.2016
(51) Int. Cl.: G06T 9/00, G06T 9/20, G06T 19/20, G06T 17/20, G06T 17/00

(54) **VERFAHREN UND VORRICHTUNG ZUM ERZEUGEN VON DATEN FÜR EINE ZWEI- ODER DREIDIMEN-SIONALE DARSTELLUNG ZUMINDEST EINES TEILS EINES OBJEKTS UND ZUM ERZEUGEN DER ZWEI- ODER DREIDIMENSIONALEN DARSTELLUNG ZUMINDEST DES TEILS DES OBJEKTS**
METHOD AND DEVICE FOR GENERATING DATA FOR TWO DIMENSIONAL OR THREE DIMENSIONAL REPRESENTATION OF AT LEAST PART OF AN OBJECT AND FOR GENERATING THE TWO OR THREE-DIMENSIONAL REPRESENTATION OF AT LEAST PART OF THE OBJECT
PROCÉDÉ ET DISPOSITIF DE GÉNÉRATION DES DONNÉES POUR UNE REPRÉSENTATION BI OU TRIDIMENSIONNELLE D'AU MOINS UNE PARTIE D'UN OBJET ET DE GÉNÉRATION DE LA REPRÉSENTATION BI OU TRIDIMENSIONNELLE DE L'AU MOINS UNE PARTIE D'UN OBJET

(30) Priorität: 08.06.2015 DE 102015210453
(43) Veröffentlichungstag der Anmeldung: 10.03.2021
(62) Teilanmeldung aus: 16729218.4
(73) Patentinhaber: Bitmanagement Software GmbH, 82335 Berg (DE)
(72) Erfinder: SCHICKEL, Peter, 82335 Berg (DE); GRAHN, Holger, 82335 Berg (DE); KOERFER, Axel, 82335 Berg (DE); STOCKER, Herbert, 82335 Berg (DE); NEUBAUER, Oliver, 82335 Berg (DE); BREZHNYEV, Kirill, 82335 Berg (DE)
(74) Vertreter: Zimmermann, Tankred Klaus

(56) Entgegenhaltungen:
- US-A1- 2005 083 248
- Wilhelm Burger ET AL: "Principles of Digital Image Processing: Core Algorithms Chapter 2" In: "Principles of Digital Image Processing: Core Algorithms", 31. Dezember 2009 (2009-12-31), Springer London, London, XP055149950, ISSN: 1863-7310 ISBN: 978-1-84-800195-4 Seiten 5-48, DOI: 10.1007/978-1-84800-195-4_2, * Seite 28, Absatz 2.3.3 Chain Codes *
- WAGENKNECHT ET AL: "A contour tracing and coding algorithm for generating 2D contour codes from 3D classified objects", PATTERN RECOGNITION, ELSEVIER, GB, Bd. 40, Nr. 4, 14. Dezember 2006 (2006-12-14), Seiten 1294-1306, XP005730700, ISSN: 0031-3203, DOI: 10.1016/J.PATCOG.2006.09.003

## Beschreibung

Die vorliegende Erfindung bezieht sich auf das Gebiet der Darstellung von Objekten, insbesondere auf das Gebiet der Erzeugung von zwei- oder dreidimensionalen Sequenzen oder Filmen. Ausführungsbeispiele betreffen ein Verfahren und eine Vorrichtung zum Erzeugen von Daten für eine zwei- oder dreidimensionale Darstellung zumindest eines Teils eines Objekts. Weitere Ausführungsbeispiele betreffen ein Verfahren und ein System zum Erzeugen einer zwei- oder dreidimensionalen Darstellung zumindest eines Teils eines Objekts.

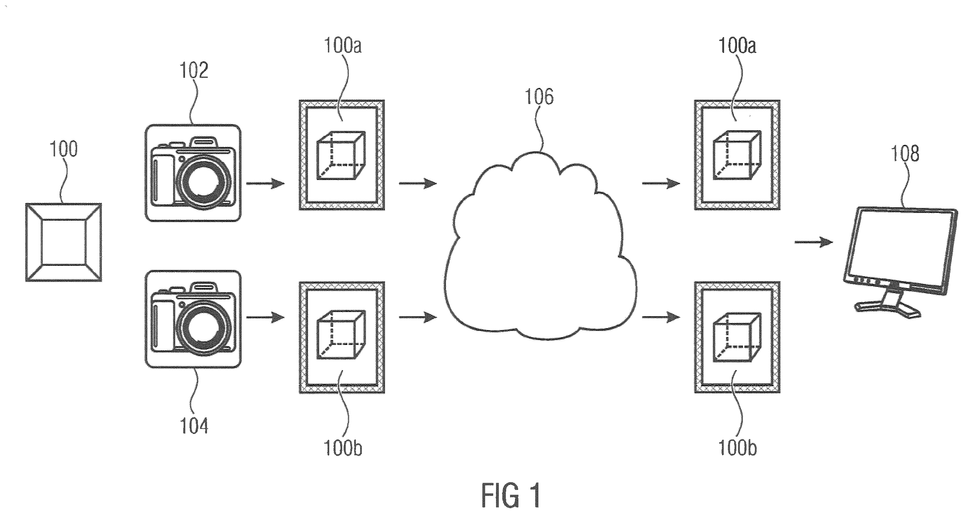

Im Stand der Technik sind verschiedene Ansätze bekannt, um eine dreidimensionale Darstellung eines Objekts, beispielsweise in Form einer Sequenz von Einzelbildern oder eines 3D-Films zu erzeugen und anzuzeigen. Fig. 1 zeigt eine schematische Darstellung eines herkömmlichen Ansatzes zur Herstellung, Übertragung und Darstellung eines stereoskopischen Films umfassend eine Vielzahl von Einzelbildern. Der Einfachheit halber ist in Fig. 1 als darzustellendes Objekt ein Würfel 100 dargestellt. Eine erste Kamera 102 erzeugt eine erste Aufnahme 100a des Würfels aus einer ersten Perspektive, und eine zweite Kamera 104 erzeugt eine zweite Aufnahme 100b des Würfels aus einer zweiten Perspektive, die sich von der ersten Perspektive unterscheidet. Mit anderen Worten werden die Aufnahmen 100a und 100b des Würfels 100 aus verschiedenen Blickwinkeln erzeugt. Die so erzeugten und die empfangenen Einzelbilder 100a, 100b werden einer geeigneten stereoskopischen Wiedergabeeinheit 108, beispielsweise einem Monitor, zur Darstellung bereitgestellt. Anstelle der Kameras 102 und 104 kann auch eine gemeinsame 3D-Kamera eingesetzt werden, welche ebenfalls zwei Aufnahmen des Objekts 100 erzeugt, die dann auf die oben beschriebene Art und Weise an den Monitor 108 zur Darstellung übertragen werden.

Der anhand der Fig. 1 beschriebene, herkömmliche Ansatz ist nachteilhaft, da die über das Übertragungsmedium 106 zu übertragende Datenmenge von mindestens zwei Bildern 100a und 100b sehr groß ist, was mit einer entsprechend hohen Datenübertragungszeit einhergeht. Selbst bei einer Komprimierung der zweidimensionalen Aufnahmen oder Bilder 100a, 100b ist die erforderliche Dauer für die Komprimierung der Daten groß, so dass die Gesamtübertragungszeit von der Stelle, an der die Aufnahme des Objekts 100 erzeugt wird, bis zur Stelle, an der die dreidimensionale Wiedergabe erfolgen soll, sehr hoch ist. Beispielhaft sei eine stereoskopische Aufnahme des Würfels 100 angenommen, und bei der anhand der Fig. 1 beschriebenen Vorgehensweise ist für die Übertragung der erforderlichen Daten zur Darstellung eines Einzelbilds des Würfels am Monitor 108 unter Zugrundelegung einer Bildgröße von 1024 x 768 Pixel folgender Speicherplatz erforderlich: 2 Bilder x 1024(X-Wert) x 768(Y-Wert) x 3(RGB-Farb-Wert) = 4718592 Byte.

Diese große Datenmenge führt zu den oben angesprochenen hohen Übertragungszeiten, und macht die Übertragung von Bewegtbildern eines sich bewegenden Objekts in dreidimensionaler Ausgestaltung nahezu unmöglich, da hierfür eine Übertragung von bis zu 30 Frames pro Sekunde erforderlich ist, wobei jeder Frame die oben angegebene Datenmenge aufweist. Somit ist eine solche Übertragung eines sich bewegenden Objekts 100, dessen Bewegung dreidimensional an der Empfangsseite 108 dargestellt werden soll, nur mit einer hohen Zeitverzögerung möglich, so dass insbesondere ein Livestream oder Ähnliches gar nicht möglich ist. Auch eine Übertragung eines 3D-Films Ist aufgrund der erforderlichen Bandbreite nahezu unmöglich.

Die gerade erwähnte Übertragung eines Livestreams in dreidimensionaler Qualität bzw. die Übertragung einer dreidimensionalen Live-Sequenz ist beispielsweise im Zusammenhang mit der Aufnahme von Menschen und Umgebungsräumen erwünscht. Die Aufnahme von Menschen und Umgebungsräumen unter Verwendung von 3D-Kameras und die Wiedergabe als 3D-Film birgt das oben erwähnte Problem der Immensen Datenmengen, die im Internet nicht übertragbar sind, was daher rührt, dass die Daten als herkömmliche Sequenzen aus 2D-Bildern gespeichert und übertragen werden müssen. Im Stand der Technik bekannte Ansätze beschäftigen sich mit der Kodierung und Übertragung von 2D-Bilddaten aus Videoaufnahmen, jedoch ist die Datenmenge und die damit einhergehende Kodierungszeit für diese zweidimensionale Lösung im Zusammenhang mit 3D-Bilddaten zu umfangreich, so dass das grundlegende Problem der Übertragung der erforderlichen Daten zur dreidimensionalen Darstellung eines Objekts, beispielsweise auch als Bewegtbild, bleibt.

US 2005/083248 offenbart die Herstellung einer dreidimensionalen Darstellung anhand zwei Seiten-Bilder unter Verwendung eines Mesh-Modells.

Ausgehend von diesem Stand der Technik liegt der vorliegenden Erfindung die Aufgabe zugrunde, einen verbesserten Ansatz zur dreidimensionalen Darstellung eines Objekts zu schaffen.

Diese Aufgabe wird durch den Gegenstand der unabhängigen Patentansprüche gelöst. Vorteilhafte Ausgestaltungen des erfindungsgemäßen Ansatzes sind in den Unteransprüchen angegeben.

Die vorliegende Erfindung schafft ein Verfahren zum Erzeugen von Daten für eine zwei- oder dreidimensionale Darstellung zumindest eines Teils eines Objekts, mit:
Erzeugen eines 3D-Modells des Teils des Objekts unter Verwendung einer 3D-Aufnahme des Teils des Objekts; und
Bereitstellen von Daten unter Verwendung des 3D-Modells, die die Scheitelpunkte des Teils des Objekts im dreidimensionalen Raum und die den Scheitelpunkten zugeordneten Farbwerte beschreiben.

Der erfindungsgemäße Ansatz zum Erzeugen von Daten für eine zwei- oder dreidimensionale Darstellung ist vorteilhaft, da, anders als in herkömmlichen Ansätzen, auf die aufwendige Übertragung von zweidimensionalen Bilddaten verzichtet wird. Vielmehr wird ausgehend von den dreidimensionalen Bilddaten, welche eine 3D-Aufnahme des Teils des Objekts darstellen, ein 3D-Modell erstellt, welches zumindest den Teil des Objekts darstellt, von dem die 3D-Aufnahme erhalten wurde. Dieses 3D-Modell kann beispielsweise ein Gittermodell oder ein Dreiecksnetz sein, wie es beispielsweise aus dem Bereich der CAD-Technik bekannt ist. Das so erhaltene Modell lässt sich durch die Position der Scheitelwerte im dreidimensionalen Raum beschreiben, beispielsweise im kartesischen Koordinatensystem durch die X-, Y- und Z-Werte der Scheitelpunkte. Ferner lassen sich die Farbwerte den entsprechenden Scheitelpunkten zuordnen, ggf. werden auch noch Texturinformationen übertragen. Die hierdurch erzeugte Datenmenge ist um ein Vielfaches geringer als die Datenmenge, die bei der Übertragung eines 2D-Bilds mit einer Größe von 1024 x 768 Pixel anfällt, so dass hierdurch eine aufgrund der geringen Datenmenge zur Darstellung des Objekts in dreidimensionaler Form eine schnelle und verzögerungsfreie Übertragung der Daten über ein Übertragungsmedium ermöglicht wird, insbesondere werden die Probleme im Zusammenhang mit den im Stand der Technik herkömmlicherweise anfallenden großen Datenmengen verhindert. Die so erzeugten Daten können entweder zur Erzeugung einer dreidimensionalen Darstellung (z.B. eine 3D-Livesequenz oder ein 3D-Film) oder zur Erzeugung einer zweidimensionalen Darstellung (z.B. eine 2D-Livesequenz oder ein 2D-Film) auf einer geeigneten Anzeigevorrichtung zur Darstellung des Objekts oder des Teils des Objekts verwendet werden.

Gemäß Ausführungsbeispielen umfasst die 3D-Aufnahme den Teils des Objekts und einen Hintergrund, wobei das Verfahren ferner das Extrahieren des Hintergrunds aus den Daten unter Verwendung des Z-Werts jedes Scheitelpunkts umfasst, beispielsweise durch Entfernen eines Scheitelpunkts aus den Daten, wenn der Z-Wert des Scheitelwerts außerhalb eines vordefinierten Bereichs ist. Gemäß Ausführungsbeispielen kann zusätzlich vorgesehen sein, den Randbereichs des Objekts zu korrigieren, indem Tiefenabstände, die einen vorbestimmten Schwellwert überschreiten, herausgefiltert werden.

Diese Vorgehensweise ist vorteilhaft, da hierdurch das aufgenommene Objekt auf einfache Art und Weise ohne den ebenfalls aufgenommenen Hintergrund dargestellt werden kann, und so nur die Daten für das eigentliche Objekt erzeugt werden, nicht jedoch die ggf. gar nicht erforderlichen Hintergrunddaten, so dass hierdurch eine weitere Reduzierung der Datenmenge erreicht wird. Ferner ermöglicht diese Vorgehensweise, das durch die erzeugten Daten dreidimensional darzustellende Objekt an der Empfangsseite in einem anderen Kontext darzustellen, beispielsweise vor einem anderen Hintergrund.

Gemäß Ausführungsbeispielen wird das 3D-Modell unter Verwendung zumindest einer ersten 3D-Aufnahme und einer zweiten 3D-Aufnahme des Objekts aus jeweils unterschiedlichen Positionen erzeugt, wobei die erste und zweite 3D-Aufnahme zumindest teilweise überlappen. Die unterschiedlichen Positionen können derart gewählt sein, dass ein Bereich des Objekts, der in der ersten 3D-Aufnahme des Objekts nicht sichtbar ist, in der zweiten 3D-Aufnahme des Objekts sichtbar ist. Gemäß Ausführungsbeispielen kann vorgesehen sein, ein erstes 3D-Modell unter Verwendung der ersten 3D-Aufnahme und ein zweites 3D-Modell unter Verwendung der zweiten 3D-Aufnahme zu erzeugen, und das erste und zweite 3D-Modell in ein gemeinsames 3D-Modell zu verbinden, wobei die Daten unter Verwendung des gemeinsamen 3D-Modells bereitgestellt werden. Gemäß Ausführungsbeispielen kann das Verbinden des ersten und zweiten 3D-Modells in ein gemeinsames 3D-Modell Folgendes umfassen: Anordnen des ersten und zweiten 3D-Modells derart, dass deren Überlappungsbereiche in Deckung sind, Identifizieren der Scheitelpunkte aus dem ersten 3D-Modell und aus dem zweiten 3D-Modell, die in einer Ebene innerhalb eines vordefinierten Abstands liegen, und Zusammenfassen der identifizierten Scheitelpunkte zu einem neuen Scheitelpunkt in dem gemeinsamen 3D-Modell. Vorzugsweise wird das Identifizieren und Zusammenfassen für eine Mehrzahl von Ebenen wiederholt, wobei die Anzahl und der Abstand der Mehrzahl von Ebenen so gewählt ist, dass der Teil des Objekts durch das gemeinsame 3D-Modell dargestellt ist.

Gemäß Ausführungsbeispielen kann vorgesehen sein, dass eine Mehrzahl von 3D-Aufnahmen des Objekts aus unterschiedlichen, zumindest teilweise überlappenden Positionen verwendet wird, um das 3D-Modell zu erzeugen, so dass das 3D-Modell mehrere Abschnitte des Objekts oder sogar das vollständige Objekt umfasst.

Diese Ausgestaltung ist vorteilhaft, da hierdurch sichergestellt wird, dass alle Bereiche des Teils des Objekts, welches dreidimensional darzustellen ist, durch entsprechende Daten des 3D-Modells beschrieben werden, so dass insbesondere in einer Darstellung nicht gezeigte Abschnitte des Objekts aufgrund der zweiten Darstellung aus einer anderen Perspektive bzw. aus einem anderen Blickwinkel erkannt werden und zusammengeführt werden. Dies ermöglicht insbesondere für den Fall einer Mehrzahl von Aufnahmen aus einer Mehrzahl von Blickrichtungen die Erzeugung eines 3D-Modells des gesamten Objekts, welches dann entsprechend der Scheitelpunkte und der Farbwerte des 3D-Modells beschrieben werden, so dass bei einer Wiedergewinnung der Aufnahmen auf einfache Art und Weise an der Empfangsstelle eine Betrachtung des Objekts aus einer beliebig festlegbaren Perspektive möglich ist, insbesondere eine Betrachtung ohne fehlerhafte oder fehlende Stellen.

Gemäß Ausführungsbeispielen umfasst das Bereitstellen der Daten ein Reduzieren der Datenmenge ohne Datenverlust, durch Bestimmen der räumlichen Abstände der Scheitelwerte, und Korrigieren der räumlichen Abstände als Folgedifferenzen ausgehend von einem vorgegebenen Startpunkt. Gemäß Ausführungsbeispielen kann vorgesehen sein, mit dem Kodieren an einem unteren Punkt des Objekts zu beginnen, und spiralförmig bis zu einem oberen Punkt des Objekts fortzuführen.

Diese Vorgehensweise ist vorteilhaft, da hierdurch eine nochmalige Reduzierung der Datenmenge ermöglicht wird, ohne dass ein Datenverlust eintritt, da ausgehend vom Anfangspunkt, der vollständig kodiert ist, lediglich die Differenzwerte zu den Positionen der benachbarten Scheitelpunkte zu definieren sind, wodurch sich die angesprochene weitere Reduzierung der Datenmenge ergibt.

Gemäß Ausführungsbeispielen umfasst das Erzeugen des 3D-Modells das Bereitstellen der 3D-Aufnahme des Objekts bzw. des Teils des Objekts durch eine 3D-Kamera oder das Bereitstellen einer stereoskopischen Aufnahme des Objekts bzw. des Teils des Objekts.

Diese Ausgestaltung ist vorteilhaft, da auf bekannte Ansätze zur Erzeugung von 3D-Aufnahmen bzw. stereoskopischen Aufnahmen zurückgegriffen werden kann, die dann als Eingabe für den erfindungsgemäßen Prozess, der beispielsweise durch eine 3D-Engine durchgeführt wird, dienen, um das 3D-Modell zu erfassen und entsprechend zu kodieren.

Gemäß Ausführungsbeispielen handelt es sich bei dem Objekt um eine Person, ein Tier, einen Gegenstand oder einen Hintergrund.

Diese Vorgehensweise ist vorteilhaft, da der erfindungsgemäße Ansatz im Hinblick auf das darzustellende Objekt keinerlei Beschränkungen unterworden ist, da aus den 3D-Aufnahmen des Objekts auf die erfindungsgemäße Art und Weise ein deutlich reduzierter Datensatz zur Beschreibung desselben in dreidimensionaler Form gewonnen werden kann. Handelte es sich bei dem Objekt um einen Hintergrund, so ist dies vorteilhaft, da hierdurch die Möglichkeit besteht, einen erwünschten Hintergrund bereitzustellen, und an eine entfernte Position zur Darstellung in dreidimensionaler Ausgestaltung bereitzustellen, insbesondere ermöglicht die Darstellung des gesamten Hintergrunds, beispielsweise eines Raums, der durch mehrere Kameras In dreidimensionaler Art aufgenommen wird, die Erstellung von Daten zur Darstellung des Hintergrunds auf Grundlage des 3D-Modells, die mit einer reduzierten Datenmenge übertragen werden und die es an der Empfangsstelle ermöglichen, den Hintergrund, beispielsweise den Raum, so zu generieren, dass ein Betrachter am Empfangsort in der Lage ist, aus einer beliebigen Position/Perspektive den Hintergrund wahrzunehmen.

Gemäß Ausführungsbeispielen werden das Erzeugen des 3D-Modells und das Bereitstellen der Daten mit einer vorbestimmten Wiederholungsrate wiederholt, um eine Vielzahl von zeitlich aufeinanderfolgenden Frames zu erzeugen, die jeweils die bereitgestellten Daten enthalten und als 3D-Sequenz anzeigbar sind. Vorzugsweise ist die Wiederholungsrate derart gewählt, dass in einer Sekunde bis zu 30 Frames erzeugt werden.

Diese Vorgehensweise ist vorteilhaft, da hierdurch die Möglichkeit eröffnet wird, 3D-Sequenzen oder 3D-Filme zu erzeugen, die aufgrund der geringen Datenmenge jedes Einzelframes ohne Probleme im Hinblick auf die Übertragungsdauer, Übertragungsbandbreite und Datenmenge von der Stelle, an der die Daten erzeugt werden, an eine Empfangsstelle, an der die Daten anzuzeigen sind, übertragen werden können. Diese Vorgehensweise ermöglicht erstmals, anders als im Stand der Technik, die zuverlässige und schnelle Erzeugung von Daten zur Darstellung eines 3D-Films bzw. einer 3D-Sequenz, die für eine Übertragung über ein Übertragungsmedium mit beschränkter Bandbreite, beispielsweise das Internet, geeignet sind.

Gemäß Ausführungsbeispielen ist das Objekt zumindest das Gesicht einer Person, und das erfindungsgemäße Verfahren umfasst für jeden Frame Folgendes: Bereitstellen eines statischen Gesichtsmodells eines Originalgesichts einer anderen Person, Bestimmen einer Position des Gesichts der Person im Raum bei der Erzeugung der 3D-Aufnahme, Überlagern des 3D-Modells des Gesichts der Person mit dem statischen Gesichtsmodell der anderen Person, Anpassen des 3D-Modells des Gesichts der Person an denjenigen Stellen, an denen keine Bewegung vorliegt, an das statische Gesichtsmodell der anderen Person, Erstellen einer Textur aus der 3D-Aufnahme des Gesichts der Person, die an den jeweiligen Stellen, an denen eine Bewegung vorliegt, transparent ist, um eine Lochmaskentextur zu erzeugen, und halbtransparentes Texturieren der Lochmaskentextur auf das angepasste 3D-Modell des Gesichts der Person, so dass eine sich ergebende 3D-Sequenz für das menschliche Auge eine bewegte und animierte Darstellung des Originalgesichts zeigt.

Diese Vorgehensweise ist vorteilhaft, da hierdurch auf einfache Art und Weise ermöglicht wird, einer Person, die im Hinblick auf Körperbau und Statur einer bekannten Person ähnlich ist, die Gesichtskonturen der anderen Person zuzuordnen, so dass die bereitgestellten Daten, die aufgrund der erfindungsgemäßen Vorgehensweise eine geringe Datenmenge aufweisen, an der Empfangsstelle so aufbereitet werden können, dass der dortige Betrachter den Eindruck gewinnt, dass die andere Person dargestellt ist, was insbesondere im Bereich der Unterhaltungsindustrie und ähnlichen Bereichen vorteilhaft ist.

Die vorliegende Erfindung schafft ferner ein Verfahren zum Erzeugen einer zwei- oder dreidimensionalen Darstellung zumindest eines Teils eines Objekts, mit:
Erzeugen von Daten für die zwei- oder dreidimensionale Darstellung des zumindest einen Teils des Objekts gemäß dem erfindungsgemäßen Verfahren;
Übertragen der Daten; und
Erzeugen einer 2D- oder 3D-Aufnahme des Teils des Objekts unter Verwendung der übertragenen Daten.

Diese Vorgehensweise ist vorteilhaft, da aufgrund des erfindungsgemäßen Ansatzes, die für die dreidimensionale Darstellung erzeugten Daten nur eine geringe Datenmenge aufweisen und somit auf einfache Art und Weise übertragen werden. Die so empfangenen Daten, welche das 3D-Modell anzeigen, ermöglichen durch Anwenden einer 3D-Engine das Erzeugen einer entsprechenden 3D-Aufnahme des Teils des Objekts, welche dann auf herkömmliche Art und Weise zur dreidimensionalen Darstellung auf einer Anzeigevorrichtung, beispielsweise einem stereoskopischen Monitor, verwendet werden kann. Dies kann beispielsweise durch Erzeugen einer 3D-Aufnahme durch die 3D-Engine erfolgen, um das Objekt stereoskopisch darzustellen oder zu projizieren. Vorzugsweise erzeugt die 3D-Engine bis zu 30 3D-Aufnahmen pro Sekunde, was vorteilhaft ist, da hierdurch Bewegtbilder, also 3D-Filme oder 3D-Sequenzen, aus den empfangenen Daten erzeugt werden können.

Gemäß Ausführungsbeispielen umfasst das Verfahren einen Anzeigen der 3D-Aufnahme durch eine Anzeigevorrichtung, z.B. einen autostereoskopischen 3D-Monitor oder durch eine Batterie von lichtstarken Projektoren, wobei vorgesehen sein kann, dass die Anzeigevorrichtung unter Verwendung des stereoskopischen 3D-Pepper's-Ghost-Verfahrens zur Erzeugung von Hologrammen arbeitet. Bei dieser Ausgestaltung kann das Verfahren ein Projizieren der von der 3D-Engine erzeugten 3D-Aufnahmen auf eine Glasscheibe umfassen, die ein Linsenraster oder eine geeignete 3D-Struktur umfasst, so dass innerhalb eines Bereichs vor der Glasscheibe für das menschliche Auge ein 3D-Hologramm entsteht.

Diese Vorgehensweise ist vorteilhaft, da hierdurch die Möglichkeit geschaffen wird, herkömmliche Anzeigevorrichtungen zur Erzeugung von 3D-Darstellungen von Objekten zu verwenden, die auf Grundlage von Eingangsdaten arbeiten, wie sie auch im Stand der Technik verwendet werden, die jedoch unter Zugrundelegung der erfindungsgemäß erzeugten Daten aus dem 3D-Modell generiert werden.

Gemäß Ausführungsbeispielen kann das Übertragen der Daten eine Übertragung über das Internet oder ein Intranet umfassen, z.B. durch eine Client-Server-Beziehung, beispielsweise unter Verwendung des TCP-IP-, des UDP- oder des Serverside-Protokolls. Alternativ oder zusätzlich kann auch ein lokales Abspeichern der Daten als Datei vorgesehen sein.

Diese Vorgehensweise ist vorteilhaft, da herkömmliche Übertragungsmedien zum Einsatz gelangen, da aufgrund der erfindungsgemäßen Vorgehensweise keine besonderen Anfordernisse an die bereitgestellte Bandbreite und Übertragungskapazität vorliegen.

Gemäß Ausführungsbeispielen kann an der Empfängerseite vorgesehen sein, eine Perspektive auszuwählen, aus der das Objekt zu betrachten ist, und das Objekt aus dargestellten Perspektive basierend auf den empfangenen Daten darzustellen, wobei die Daten das 3D-Modell des Objekts beschreiben, so dass kein Rückkanal zu der Stelle erforderlich ist, an der die 3D-Aufnahme des Objekts erzeugt wird.

Diese Vorgehensweise stellt einen besonderen Vorteil des erfindungsgemäßen Ansatzes dar, da an der Empfängerseite ein 3D-Modell des Objekts oder eines Teils des Objekts erzeugt wird, welches auf die oben beschriebene Art und Weise an die Empfängerseite übertragen wird, mit einer reduzierten Datenmenge. Dies ermöglicht an der Empfängerseite unter Zugrundelegung einer entsprechenden 3D-Engine, die Rückgewinnung des ursprünglichen 3D-Modells, so dass die gesamte 3D-Darstellung des Objekts an der Empfängerseite vorliegt. Wurde nun das gesamte Objekt als 3D-Modell erfasst und verarbeitet, so wird an der Empfängerseite die Möglichkeit geschaffen, dass beispielsweise ein Benutzer eine Perspektive auswählt, mit der er auf das entsprechende Objekt blicken möchte, und entsprechend der ausgewählten Perspektive werden die für die entsprechende Darstellung erforderlichen 3D-Aufnahmen aus dem 3D-Modell an der Empfängerseite erzeugt. Eine solche Vorgehensweise ist im Stand der Technik nicht ohne weiteres möglich, da hier empfängerseitig nur die senderseitig erzeugten Bilder vorliegen, die zur dreidimensionalen Darstellung auf der Anzeige zu kombinieren sind. Um eine andere Perspektive zu erhalten, ist es erforderlich, senderseitig eine entsprechende andere Aufnahme aus einer anderen Perspektive zu erzeugen, diese zu übertragen, um dann entsprechend eine Darstellung zu ermöglichen. Dies erfordert zum einen eine nochmalige Übertragung der Daten mit den oben bereits beschriebenen Problemen aufgrund der hohen Datenmenge, und zum anderen wäre ein Rückkanal vom Empfänger an die Senderseite nötig, um die geänderte Perspektive an den Sender zu übermitteln, um die erwünschte Neuaufnahme zu ermöglichen. Diese Problematik wird erfindungsgemäß vermieden, da empfängerseitig bereits das 3D-Modell des Objekts bzw. des Teils des Objekts vorliegt, so dass empfängerseitig bestimmt werden kann, aus welcher Perspektive dieses 3D-Modell zu betrachten ist, so dass dann die entsprechenden 3D-Aufnahmen für die Darstellung auf dem empfängerseitigen Monitor generiert werden können, ohne dass es einer Neuaufnahme und damit einer Neuübertragung der Daten oder eines Rückkanals an den Sender bedarf.

Die vorliegende schafft ferner ein Computerprogramm mit Anweisungen zum Ausführen des erfindungsgemäßen Verfahrens, wenn die Anweisungen durch einen Computer ausgeführt werden, wodurch bei einer Computerimplementierung des erfindungsgemäßen Ansatzes ebenfalls die oben erwähnten Vorteile erreicht werden.

Die vorliegende Erfindung schafft ferner eine Vorrichtung zum Erzeugen von Daten für eine zwei- oder dreidimensionale Darstellung zumindest eines Teils eines Objekts, mit:
einem Eingang, der konfiguriert ist, um eine 3D-Aufnahme des Teils des Objekts zu empfangen;
einer 3D-Engine, die mit dem Eingang verbunden ist und konfiguriert ist, um unter Verwendung der empfangenen 3D-Aufnahme ein 3D-Modell des Teils des Objekts zu erzeugen, und um unter Verwendung des 3D-Modells, Daten zu erzeugen, die die Scheitelpunkte des Teils des Objekts im dreidimensionalen Raum und die den Scheitelpunkten zugeordneten Farbwerte beschreiben; und
einem Ausgang, der mit der 3D-Engine verbunden ist und konfiguriert ist, um die erzeugten Daten bereitzustellen.

Gemäß Ausführungsbeispielen ist die 3D-Engine konfiguriert, um einen Hintergrund in der 3D-Aufnahme aus den Daten unter Verwendung des Z-Wertes jedes Scheitelpunkts zu extrahieren, wobei vorzugsweise ein Randbereich des Teils des Objekts durch Herausfiltern von Tiefenabständen, die einen vorbestimmten Schwellenwert überschreiten, korrigiert werden.

Gemäß Ausführungsbeispielen ist der Eingang konfiguriert, um zumindest eine erste 3D-Aufnahme und eine zweite 3D-Aufnahme des Objekts aus jeweils unterschiedlichen Positionen zu empfangen, wobei die erste und zweite 3D-Aufnahme zumindest teilweise überlappen. Die 3D-Engine ist konfiguriert, um das 3D-Modell unter Verwendung der ersten 3D-Aufnahme und der zweiten 3D-Aufnahme des Objekts zu erzeugen. Vorzugsweise erzeugt die 3D-Engine ein erstes 3D-Modell unter Verwendung der ersten 3D-Aufnahme und ein zweites 3D-Modell unter Verwendung der zweiten 3D-Aufnahme und ein gemeinsames 3D-Modell unter Verwendung des ersten und zweiten 3D-Modells, wobei die Daten unter Verwendung des gemeinsamen 3D-Modells erzeugt werden.

Gemäß Ausführungsbeispielen bewirkt die 3D-Engine eine Reduzierung der Datenmenge ohne Datenverlust, indem die räumlichen Abstände der Scheitelwerte bestimmt werden, und die räumlichen Abstände als Folgedifferenzen ausgehend von einem vorgegebenen Startpunkt bis zu einem Endpunkt spindelartig kodiert werden.

Gemäß Ausführungsbeispielen umfasst die Vorrichtung eine 3D-Kamera oder eine stereoskopische Aufnahmevorrichtung zum Erzeugen der 3D-Aufnahme des Objekts, wobei die 3D-Kamera bzw. die stereoskopische Aufnahmevorrichtung mit dem Eingang verbunden ist.

Gemäß Ausführungsbeispielen ist die 3D-Engine konfiguriert, um das 3D-Modell und die Daten mit einer bestimmten Wiederholungsrate zu erzeugen, um eine Vielzahl von zeitlich aufeinanderfolgenden Frames zu erzeugen, die jeweils die bereitgestellten Daten enthalten und als 3D-Sequenz anzeigbar sind.

Gemäß Ausführungsbeispielen ist das Objekt zumindest das Gesicht einer Person, und die 3D-Engine ist konfiguriert, um für jeden Frame eine Position des Gesichts der Person im Raum bei der Erzeugung der 3D-Aufnahme zu bestimmen, um das 3D-Modell des Gesichts der Person mit einem statischen Gesichtsmodell eines Originalgesichts einer anderen Person zu überlagern, um das 3D-Modell des Gesichts der Person an denjenigen Stellen, an denen keine Bewegung vorliegt, an das statische Gesichtsmodell der anderen Person anzupassen, um eine Textur aus der 3D-Aufnahme des Gesichts der Person, die an denjenigen Stellen, an denen eine Bewegung vorliegt, transparent ist, zu erstellen, um eine Lochmaskentextur zu erzeugen, und um die Lochmaskentextur auf das angepasste 3D-Modell des Gesichts der Person halbtransparent zu texturieren, so dass eine sich ergebende 3D-Sequenz für das menschliche Auge eine bewegte und animierte Darstellung des Originalgesichts zeigt.

Die gerade genannten Ausführungsbeispiele bieten die Vorteile, die oben im Zusammenhang mit dem erfindungsgemäßen Verfahren erläutert wurden.

Die vorliegende Erfindung schafft ein System zum Erzeugen einer zwei- oder dreidimensionalen Darstellung zumindest eines Teils eines Objekts, mit:
einer Vorrichtung zum Erzeugen von Daten für die zwei- oder dreidimensionale Darstellung des zumindest einen Teils des Objekts gemäß Ausführungsbeispielen der Erfindung,
einem Übertragungsmedium zum Übertragen der Daten, das mit der Vorrichtung zum Erzeugen der Daten verbunden ist, und
einer 3D-Engine, die mit dem Übertragungsmedium verbunden ist, und konfiguriert ist, um eine 2D- oder 3D-Aufnahme des Teils des Objekts unter Verwendung der übertragenen Daten zu erzeugen.

Gemäß Ausführungsbeispielen umfasst das System eine Anzeigevorrichtung, z.B. in Form eines autostereoskopischen 3D-Monitos oder in Form einer Batterie von lichtstarken Projektoren, die mit der 3D-Engine verbunden ist. Vorzugsweise arbeitet die Anzeigevorrichtung unter Verwendung des stereoskopischen 3D Pepper's-Ghost Verfahrens zur Erzeugung von Hologrammen, und ist konfiguriert, um die von der 3D-Engine erzeugten 3D-Aufnahmen auf eine Glasscheibe zu projizieren, die ein Linsenraster oder eine geeignete 3D-Struktur umfasst, so dass innerhalb eines Bereichs vor der Glasscheibe für das menschliche Auge ein 3D-Hologramm entsteht.

Gemäß Ausführungsbeispielen ist die 3D-Engine des Systems konfiguriert, um eine Auswahl einer Perspektive zu empfangen, aus der das Objekt zu betrachten ist, und um das Objekt aus der ausgewählten Perspektive basierend auf den empfangenen Daten, die das 3D-Modell des Objekts beschreiben, darzustellen, so dass kein Rückkanal zu der Stelle erforderlich ist, an der die 3D-Aufnahme des Objekts erzeugt wird.

Das erfindungsgemäße System hat die oben, im Zusammenhang mit dem Verfahren näher beschriebenen Vorteile.

Ausführungsbeispiele der vorliegenden Erfindung schaffen somit die Möglichkeit für eine interaktive Echtzeit-3D-Graphik. Das im Stand der Technik bestehende Problem im Hinblick auf die ungeheure Datenmenge betreffend die Darstellung von 3D-Objekten wird gemäß Ausführungsbeispielen mit Hilfe einer 3D-Engine angegangen, auf der beispielsweise eine sogenannte Echtzeitsoftware für die Darstellung einer Computergraphik läuft. Bei der Kodierung der 3D-Bilddaten wird die räumliche Komponente des 3D-Modells als eine deterministische Folge von räumlichen Abständen ausgenutzt, so dass die Datenmenge bei gleichbleibender Qualität merklich reduziert wird. Die sich ergebende Datenmenge als Folge von räumlichen Abständen ist um Größenordnungen kleiner als die im Stand der Technik anfallende Datenmenge zur Übertragung von 3D-Bilddaten als Folge von 2D-Bildern. Darüber hinaus kann die räumliche Kodierung von Abstandswerten schneller durchgeführt werden als die Kompression von 2D-Bilddaten, was es ermöglicht, eine Live-Übertragung von 3D-Bilddaten in Echtzeit durchzuführen, die mit einer geeigneten 3D-Engine beim Empfänger in drei Dimensionen mit interaktiver Blickpunktänderung oder als stereoskopischer Film als mehrere 2D-Bilder pro Frame dargestellt werden können.

Ausführungsbeispiele der vorliegenden Erfindung werden nachfolgend unter Bezugnahme auf die beiliegenden Zeichnungen näher erläutert. Es zeigen:
- Fig. 1: eine schematische Darstellung eines herkömmlichen Ansatzes zur Herstellung, Übertragung und Darstellung eines stereoskopischen Films umfassend eine Vielzahl von Einzelbildern;
- Fig. 2: eine schematische Darstellung der erfindungsgemäßen Vorgehensweise zur Herstellung, Übertragung und Darstellung eines stereoskopischen Films mit aus einer 3D-Engine erzeugten Einzelmodellen;
- Fig. 3: schematisch die Vorgehensweise zur Entfernung des Hintergrunds aus einer Szene gemäß einem Ausführungsbeispiel, wobei Fig. 3(a) die anfänglich aufgenommene Szene zeigt, und wobei Fig. 3(b) die Szene ohne Hintergrund zeigt;
- Fig. 4: ein Flussdiagramm eines Ausführungsbeispiels des Verfahrens gemäß der vorliegenden Erfindung zum Erzeugen von Daten für eine dreidimensionale Darstellung zumindest eines Teils eines Objekts;
- Fig. 5: ein Flussdiagramm eines Ausführungsbeispiels der Erfindung, bei dem das 3D-Modell unter Verwendung zumindest einer ersten 3D-Aufnahme und einer zweiten 3D-Aufnahme des Objekts aus jeweils unterschiedlichen, sich zumindest teilweise überlappenden Positionen erzeugt wird;
- Fig. 6: ein Flussdiagramm, welches ein Ausführungsbeispiel des erfindungsgemäßen Verfahrens zur Veränderung eines menschlichen Gesichts darstellt; und
- Fig. 7: ein Flussdiagramm eines Ausführungsbeispiels des erfindungsgemäßen Verfahrens zum Erzeugen einer dreidimensionalen Darstellung zumindest eines Teils eines Objekts, wie es beispielsweise durch das anhand der Fig. 2 beschriebene System durchgeführt wird.

In der nachfolgenden Beschreibung der bevorzugten Ausführungsbeispiele werden gleiche oder gleichwirkende Elemente mit den gleichen Bezugszeichen versehen.

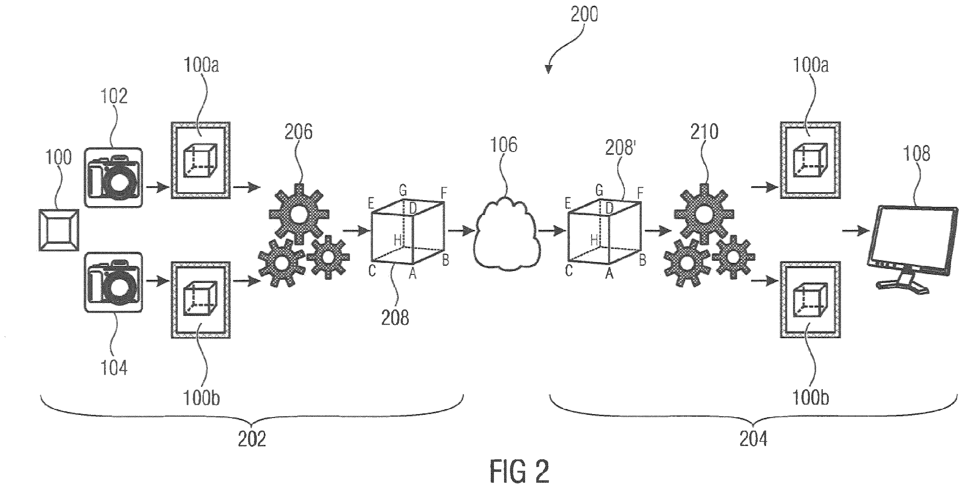

Die Fig. 2 zeigt eine schematische Darstellung der erfindungsgemäßen Vorgehensweise zur Herstellung, Übertragung und Darstellung eines stereoskopischen Films mit aus einer 3D-Engine erzeugten Einzelmodellen, Ähnlich wie in Fig. 1 wird auch in Fig. 2 die dreidimensionale Abbildung eines Würfels 100 als Grundlage für die Erläuterung des erfindungsgemäßen Ansatzes gewählt. Fig. 2 zeigt eine schematische Gesamtdarstellung des Systems 200 gemäß Ausführungsbeispielen der vorliegenden Erfindung zur Erzeugung einer dreidimensionalen Darstellung zumindest eines Teils eines Objekts, nämlich des Würfels 100. Das System 100 umfasst das bereits anhand der Fig. 1 beschriebene Übertragungsmedium 108, welches zwischen einer Senderseite 202 und einer Empfängerseite 204 angeordnet ist. Elemente, die bereits anhand der Fig. 1 beschrieben wurden, sind in der Fig. 2 mit den gleichen Bezugszeichen versehen und werden nicht nochmals im Detail erläutert.

Die in Fig. 2 gezeigte Senderseite 202 kann beispielsweise eine Vorrichtung zum Erzeugen von Daten für eine dreidimensionale Darstellung zumindest eines Teils eines Objekts umfassen, wobei die Vorrichtung gemäß dem gezeigten Ausführungsbeispiel eine 3D-Engine 206 umfasst, die in Fig. 2 schematisch dargestellt ist, und die als Eingang die 3D-Aufnahme umfassend die zwei Bilder 100a und 100b des Würfels 100 erhält. Basierend auf der 3D-Aufnahme erzeugt die 3D-Engine ein Modell 208 des Würfels 100 umfassend die im Raum an unterschiedlichen Positionen angeordneten Scheitelpunkte A bis H. Abhängig davon, aus welchen unterschiedlichen Perspektiven der Würfel 100 aufgenommen wird, umfasst das durch die 3D-Engine 206 erzeugte 3D-Modell entweder das gesamte Objekt, also den gesamten Würfel 100 oder nur einen Teil des Würfels 100, Bei dem in Fig. 2 dargestellten Ausführungsbeispiel sei angenommen, dass lediglich eine einzelne 3D-Aufnahme des Würfels 100 aus einer Perspektive existiert, so dass das 3D-Modell entsprechend dieser Ausführungsform lediglich die Vorderseite und die Oberseite des Würfels darstellen würde, und entsprechend die Scheitelpunkte A bis G existieren.

Bei anderen Ausführungsbeispielen kann vorgesehen sein, den Würfel aus einer zweiten Perspektive aufzunehmen, die sich von der ersten Perspektive unterscheidet, so dass auch dessen Rückseite und gegebenenfalls auch dessen Unterseite als Modell abgebildet werden können, in diesem Fall würde die 3D-Engine 206 auf Grundlage der Eingangsdaten, nämlich auf Grundlage der zwei 3D-Aufnahmen, ein 3D-Modell des Würfels 208 erzeugen, welches die Scheitelpunkte A bis H umfasst, also ein 3D-Modell, welches von allen Seiten betrachtet werden kann.

Gemäß der vorliegenden Erfindung ist die 3D-Engine 206 wirksam, um das 3D-Modell 208 des Würfels 100 in Form der Scheitelpunkte A bis H und als Farbwerte, die den entsprechenden Scheitelpunkten zugeordnet sind, zu definieren. Die durch die Kamera 102, 104 aufgenommene Szene, welche beispielsweise den Würfel 100 umfasst, liefert am Ausgang der 3D-Engine 206 ein Einzelbild umfassend Farbwerte und Tiefeninformationen. Die Farbwerte bestehen jeweils, gemäß einem Ausführungsbeispiel, aus einem Byte für Rot, einem Byte für Grün und einem Byte für Blau (RGB-Farbwerte), also aus 3 Bytes insgesamt. Die Tiefeninformationen umfassen die X-, Y- und Z-Werte für die Scheitelpunkte des 3D-Modells im dreidimensionalen Raum. Gemäß Ausführungsbeispielen können die X-, Y- und Z-Werte jeweils als Gleltkommazahlen mit einfacher Genauigkeit gespeichert werden, mit einer Länge von beispielsweise 32 Bit. Die Folge von X-, Y- und Z-Werten wird als Scheitelpunkte bezeichnet, und die Menge aller Scheitelpunkte des 3D-Modells 208 wird als Punktwolke bezeichnet.

Vergleicht man die Vorgehensweise gemäß dem Stand der Technik, wie sie anhand der Fig. 1 erläutert wurde, und den erfindungsgemäßen Ansatz, so ergibt sich eine massive Datenreduzierung aufgrund der Darstellung des Objekts 100 in Form eines 3D-Modells, welches über die Scheitelpunkte und Farbwerte definiert ist. Wie oben bereits erläutert wurde, erzeugen herkömmliche Ansätze einen zu übertragenen Datensatz für einen Würfel, der eine Größe von 4718592 Byte aufweist, unter Zugrundelegung von Bildern mit einer Auflösung von 1024x768 Pixel, so dass sich bei zwei Bildern und drei Farbwerten die gerade genannte Bytezahl ergibt. Im Gegensatz hierzu ist der erfindungsgemäße Ansatz von deutlichem Vorteil, da eine massive Reduzierung der Datenmenge erreicht wird, da beispielsweise bei der in Fig. 2 dargestellten Vorgehensweise, unter der Annahme, dass das 3D-Modell 208 eine vollständige Abbildung des Würfels 100 darstellt, nur 8 Scheitelpunkte a 4 Byte Fließkommawert erforderlich sind, und jeweils 3 Byte als Farb-wert, so dass als Datenmenge für einen Rahmen/ein Einzelbild zur Darstellung des 3D-Objekts 100 nur 8x4x3 Byte = 96 Byte erforderlich sind.

Hinsichtlich der Fig. 2 wird darauf hingewiesen, dass das dort gezeigte Beispiel der Erzeugung von Daten zur dreidimensionalen Darstellung eines Würfels 100 keine Einschränkung des erfindungsgemäßen Ansatzes darstellt, tatsächlich kann es sich beim Objekt 100 um einen beliebigen Gegenstand mit beliebig komplexer Struktur handeln, beispielsweise auch um eine Darstellung einer Person oder einer Maschine. Die in Fig. 2 gezeigten3D-Engines können z.B. durch Computersysteme realisiert sein, die ggf. für eine Erzeugung von 3D-Modellen hardwaretechnisch entsprechend ausgerüstet sind und auf denen entsprechende Software zur Ausführung vorgesehen ist.

Gemäß Ausführungsbeispielen ist die Vorrichtung 202 ausgebildet, um eine 3D-Aufnahme 100a, 100b des Objekts 100 wiederholt zu erzeugen, um Daten für eine Vielzahl von aufeinanderfolgenden Frames für die Übertragung über das Medium 106 bereitzustellen, um so auf der Empfängerseite 204 eine 3D-Livesequenz bzw. einen 3D-Film darzustellen. Um dies zu erreichen, werden gemäß Ausführungsbeispielen pro Sekunde durch die Vorrichtung 202 bis zu 30 Frames erzeugt, d.h. es werden bis zu 30 Einzelbilder von dem Objekt 100 aufgenommen. Jedes Einzelbild wird entsprechend den obigen Ausführungen über die 3D-Engine 206 unter Verwendung des 3D-Modells kodiert, so dass jeder der 30 Frames pro Sekunde einen Datensatz enthält, der zum Zeitpunkt der Aufnahme die Scheitelpunkte und die den Scheitelpunkten zugeordneten Farbwerte des Objekts 100 enthält.

Die Vorrichtung 202 und das hierdurch implementierte Verfahren ist vorteilhaft, da eine Datenmenge, die über das Übertragungsmedium 106 übertragen ist, deutlich reduziert wird, wodurch sich auch die Übertragungszeit deutlich reduziert. Insofern ist die Zeit zur Berechnung der 3D-Modelle kürzer als die zur Komprimierung von Einzelbildern gemäß dem Stand der Technik erforderliche Zeit. Zusätzlich ermöglicht die vollständige Übertragung der 3D-Informationen über das 3D-Modell empfängerseitig die Möglichkeit, einen Blickpunkt auf das Objekt auf der Empfängerseite frei zu wählen, da die eigentlichen Bilder nach Übertragung der Daten des 3D-Modells empfängerseitig durch eine 3D-Engine zur Laufzeit erzeugt werden und zur Anzeige gebracht werden. Genauer gesagt werden gemäß Ausführungsbeispielen die Daten (der Datensatz), die das 3D-Modell 208, welches senderseitig erzeugt wurde, beschreiben, über das Übertragungsmedium 106 zu der Empfängerseite 204 übertragen, so dass die entsprechenden Daten, welche das 3D-Modell 208' beschreiben, auf der Empfängerseite 204 vorliegen. Diese Daten werden einer 3D-Engine 210 zugeführt, welche auf Grundlage des 3D-Modells die 3D-Aufnahme des Objekts im entsprechenden Frame/Rahmen, z.B. die zwei Aufnahmen 100a, 100b, erzeugt, die dann, wie im Stand der Technik, einem geeigneten Monitor 108 oder einer anderen geeigneten Anzeigevorrichtung zur dreidimensionalen Darstellung des Objekts auf Empfängerseite 204 bereitgestellt werden.

Gemäß Ausführungsbeispielen wird somit ein Ansatz gelehrt, bei dem eine Übertragung einer Sequenz von einzelnen 3D-Modellen durchgeführt wird, anstelle einer Übertragung einer Sequenz von einzelnen 2D-Bildern, wie es im Stand der Technik der Fall ist. Die 3D-Modelle 208 werden vor der Übertragung mit Hilfe der 3D-Engine 206 erzeugt, wobei die 3D-Engine beispielsweise aus den Bildern 100a, 100b Kanten erkennt und basierend auf den erkannten Kanten das 3D-Modell erzeugt. Beispielsweise kann die 3D-Engine 206 gemeinsame Bereiche in den Bildern 100a, 100b ermitteln, z.B. gemeinsame Kanten, die zu dem Objekt 100 gehören, um daraus das resultierende 3D-Modell bzw. 3D-Gitter (Mesh) des Objekts 100 zu ermitteln. Nach Übertragung wird das durch die Scheitelpunkte und Farbwerte beschriebene 3D-Modell durch die empfängerseitige 3D-Engine 210 wieder in die zwei Bilder 100a und 100b umgewandelt, um das 3D-Objekt aus verschiedenen Blickwinkeln mit den Einzelbildern einer a und einer b darzustellen, die dann auf dem stereoskopischen Ausgabegerät 108 dargestellt werden.

Nachfolgend werden weitere Ausführungsbeispiele des erfindungsgemäßen Ansatzes erläutert. Es sei angenommen, dass als Objekt eine Person aufzunehmen ist, der sich innerhalb einer Szene befindet. Die Szene umfasst den Menschen, der in einem Raum steht und sich z.B. an seinem Platz leicht hin und her bewegt. Gemäß Ausführungsbeispielen ist vorgesehen, dass die Vorrichtung 202 (siehe Fig. 2) 30 Frames/Rahmen dieser Szene pro Sekunde aufnimmt, und für jeden Rahmen ein entsprechendes 3D-Modell der Szene erzeugt und durch die Scheitelpunkte und Farbwerte beschreibt. Die so erzeugten Daten für jeden Frame (jedes Einzelbild) umfassen, wie erwähnt, die Farbwerte und die Tiefeninformationen, beispielsweise RGB-Werte und X-Y- und Z-Werte, die jeweils einen Scheitelpunkt definieren, wobei die Mehrzahl der Scheitelpunkte eine Punktwolke bildet. Gemäß Ausführungsbeispielen kann erwünscht sein, den Hintergrund aus der Szene zu extrahieren, beispielsweise dann, wenn lediglich die Darstellung der Person an die Empfängerseite 204 (siehe Fig. 2) übertragen werden soll und dort beispielsweise mit einem anderen Hintergrund dargestellt werden soll, der entweder vom Sender zum Empfänger vorab oder parallel übertragen wird oder der am Empfänger vorgegeben Ist. Zur Entfernung des Hintergrunds wird zunächst aus jeder einzelnen Punktwolke der Hintergrund extrahiert, d.h. aus der Vielzahl von Scheitelpunkten, die für ein Einzelbild existieren (= einzelne Punktwolke) werden diejenigen Scheitelpunkte gelöscht, die als dem Hintergrund zugehörig erkannt werden. Gemäß Ausführungsbeispielen wird der Z-Wert jedes einzelnen Scheitelpunkts mit einem Korridor-Abstand (Schwellwertabstand) des Standbereichs der darzustellenden Person verglichen, und Abstände, die anzeigen, dass ein Scheitelpunkt weiter entfernt oder näher als der Korridorabstand ist, wird als Hintergrundscheitelpunkt erkannt und weggelassen, d.h. es werden nur diejenigen Scheitelpunkte (Vertices) zugelassen, die innerhalb des Korridorabstands liegen, und die so gewonnenen Daten sind diejenigen, die die Person in einer Punktwolke abbilden. Mit anderen Worten wird die Anzahl von Scheitelpunkten (Vertices), welche die Punktwolke pro Einzelbild definieren, um diejenigen reduziert, die eindeutig dem Hintergrund zugeordnet werden.

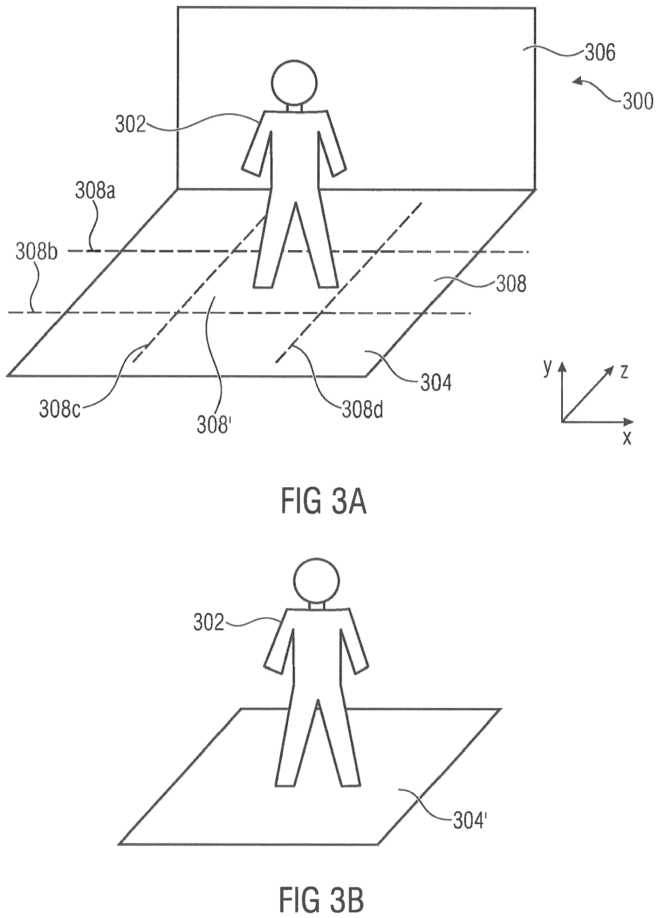

Fig. 3 zeigt schematisch diese Vorgehensweise, wobei Fig. 3(a) die anfänglich aufgenommene Szene 300 zeigt, in der eine Person 302 (Objekt) auf einem Boden 304 stehend dargestellt ist. Ferner ist eine Rückwand 306 dargestellt. Entlang der Z-Koordinate ist der Bereich 308 dargestellt, der durch die in X-Richtung verlaufenden gestrichelten Linien 308a, 308b begrenzt ist. Der Bereich 308 ist der oben erwähnte Schwellwertkorridor, und entsprechend Ausführungsbeispielen werden Scheitelwerte eines 3D-Modells, das aufgrund der 3D-Aufnahme der Szene 300 erzeugt wurde, gestrichen, sofern diese außerhalb des Schwellwertkorridors 308 liegen, so dass sich die in Fig. 3(b) gezeigte Darstellung ergibt, bei der lediglich die Person 302 sowie ein Teil des Bodens 304' verbleiben.

Bei weiteren Ausführungsbeispielen kann zusätzlich vorgesehen sein, den Schwellwertkorridor auch in X-Richtung zu beschränken, wie dies durch die gestrichelten Linien 308c und 308d in Fig. 3(a) dargestellt ist. Scheitelwerte, mit X-Werten außerhalb des Bereichs 308' werden aus den Daten, welche das 3D-Modell basierend auf der Szene 300 beschreiben gestrichen, so dass der verbleibende Bodenbereich 304' noch weiter reduziert werden kann.

Das durch die 3D-Engine erzeugte Datenmodell der Person 302 (siehe beispielsweise Fig. 3(b)) kann beispielsweise ein Gitter-Modell oder ein Dreiecks-Netz sein, abhängig von der verwendeten 3D-Engine. Am äußeren Rand des Dreiecks-Netzes, welches nach dem Abschneiden oder Extrahieren des Hintergrunds verbleibt, kann es aufgrund von Rauschen zu ungenauen Tiefenwerten kommen, die sich in fehlerhaften Abschnitten des 3D-Modells, beispielsweise in Dreiecken mit großer Tiefe, äußern. Gemäß Ausführungsbeispielen kann der Randbereich des 3D-Modells durch einen Glättungsalgorithmus geglättet werden, beispielsweise durch einen Glättungsalgorithmus, der große Tiefenwerte bzw. Tiefenabstände herausfiltert.

Wie oben erwähnt wurde, kann ein Objekt 100, 302 aus mehreren Perspektiven aufgenommen werden. Ein Grund für die mehreren Aufnahmen kann darin bestehen, dass das Objekt vollständig abzubilden ist, so dass ein vollständiges 3D-Modell vorliegt. In einem solchen Fall, aber auch in einem Fall, in dem nur ein Teil des Objekts, beispielsweise eine Vorderseite einer Person oder eines Objekts abgebildet werden, kann eine Situation auftreten, dass aufgrund der Ausgestaltung des Objekts, beispielsweise aufgrund einer Verdeckung eines Teils des Körpers einer Person durch eine Hand der Person oder durch einen vorspringenden Abschnitt eines Objekts dahinterliegende Abschnitte durch die eine 3D-Aufnahme nicht erfasst werden. Hierdurch entstehen bei der 3D-Aufnahme sogenannte Löcher, die als schwarze Stellen im 3D-Modell, beispielsweise im Dreiecks-Gitter, erkennbar sind. Bei der Verwendung einer 3D-Kamera entstehen diese Löcher dadurch, dass der Abstand des Infrarot-Sensors und der bildgebenden Kamera einige Zentimeter beträgt, so dass sich die Blickpyramiden beider Sensoren nicht vollständig überdecken. Durch perspektivische Verdeckungen, z.B. eine Hand einer Person vor ihrem Körper, entstehen somit Bereiche, die kein Dreiecks-Netz bzw. keinen Abschnitt des 3D-Modells als Grundlage haben, oder auch Bereiche, die keine Bildtextur besitzen.

Diese Problematik wird gemäß Ausführungsbeispielen dadurch gelöst, dass zumindest zwei 3D-Kameras verwendet werden, wobei gemäß anderen Ausführungsbeispielen auch mehr als zwei 3D-Kameras eingesetzt werden, die in einem Abstand zueinander angeordnet sind, so dass die hierdurch erzeugten 3D-Aufnahmen zumindest teilweise überlappend sind. Dies ermöglicht es, die Bereiche einer ersten 3D-Aufnahme, in denen sich eines der oben genannten Löcher befindet, durch die 3D-Aufnahme der weiteren Kamera(s) abzudecken. Beispielsweise wird aus den Scheitelpunktwerten Jede 3D-Aufnahme, also aus den verschiedenen Punktwolken der verschiedenen 3D-Aufnahmen durch Triangulierung ein Dreiecks-Netz erstellt und die aufgenommenen Bilder werden auf dieses Dreiecks-Netz projiziert. Triangulierung kann beispielsweise unter Verwendung des Verfahrens gemäß Delauny oder unter Verwendung eines Höhenfeldes durchgeführt werden. Stellt man beide Dreiecksnetze übereinander sind keine schwarzen Bereiche ohne 3D-Informationen bzw. Farbinformationen mehr zu sehen.

Die auf die oben beschriebene Art und Weise erhaltenen texturierten 3D-Modelle bzw. Dreiecksnetze von verschiedenen, sich überlappenden Ansichten der Person werden nachfolgend, gemäß Ausführungsbeispielen, zu einer 360°-Rundumsicht der Person verbunden. Jeweils zwei sich überlappende Dreiecksnetze werden zur Überdeckung In Überlappungsbereichen gebracht und beginnend mit einer vorgegebenen Ebene, beispielsweise einer horizontalen Ebene (X-Z-Ebene) werden diejenigen Scheitelpunkte identifiziert, die einen vorbestimmten Abstand zueinander aufweisen. Abhängig von der Wahl des Abstands stellt sich die Datenmenge ein, und abhängig von den Gegebenheiten kann der Abstand variiert werden. Beispielsweise kann abhängig von der späteren Übertragung der Daten, bei Kenntnis des Übertragungsmediums, die Datenmenge an eine Bandbreite angepasst werden und entsprechend der Abstand bestimmt werden. Die identifizierten Punkte werden in einem neuen Dreiecksnetz zusammengefasst, und wenn eine Punktmenge, beispielsweise eine kreisförmige Punktmenge auf einer Ebene gefunden wurde, geht das Verfahren zur nächst höheren Ebene, was wiederholt wird, bis die relevante Punktewolke oder die relevanten Scheitelpunkte für die Außenhülle des Objekts gefunden sind. Beispielsweise können alle resultierenden Punkte von unten nach oben in einer verbundenen Spindel dargestellt werden. Als Ergebnis wird eine texturierte, verbundene Punktwolke der Außenhülle des Objekts als ein Frame erhalten, kurz gesagt, eine Vielzahl von X-, Y-, Z-Werten mit einer Reihenfolge.

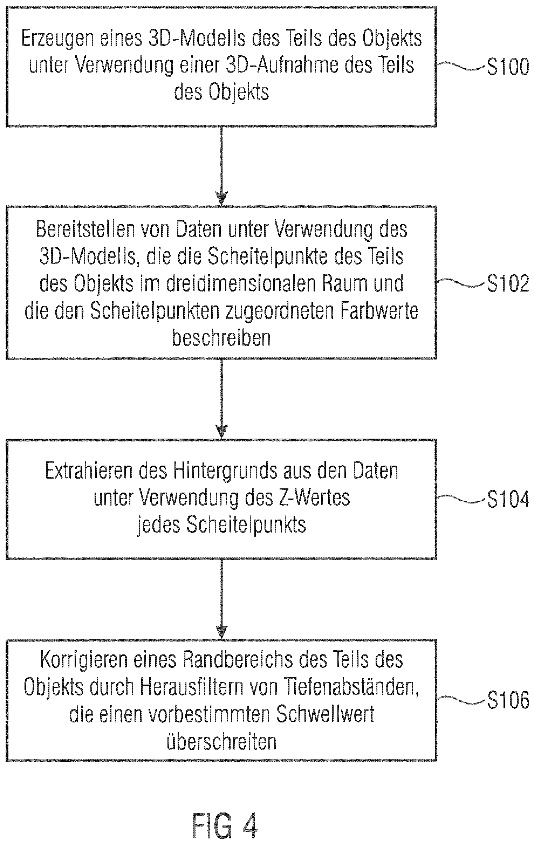

Fig. 4 zeigt ein Flussdiagramm eines Ausführungsbeispiels des Verfahrens gemäß der vorliegenden Erfindung zum Erzeugen von Daten für eine dreidimensionale Darstellung zumindest eines Teils eines Objekts, wie es oben erläutert wurde. In einem ersten Schritt S100 wird ein 3D-Modell des Teils des Objekts unter Verwendung einer 3D-Aufnahme des Teils des Objekts erzeugt. Im Schritt S102 werden Daten unter Verwendung des 3D-Modells bereitgestellt, die die Scheitelpunkte des Teils des Objekts im dreidimensionalen Raum und die den Scheitelpunkten zugeordneten Farbwerte beschreiben. Das Verfahren umfasst als optionalen Schritt das Extrahieren S104 des Hintergrunds aus den Daten unter Verwendung des Z-Werts jedes Scheitelpunkts, wie es oben erläutert wurde, und als weiteren optionalen Schritt das Korrigieren S106 eines Randbereichs des Objekts durch Herausfiltern von Tiefenabständen, die einen vorbestimmten Schwellenwert überschreiten, wie es oben erläutert wurde. Gemäß Ausführungsbeispielen kann die Korrektur des Randbereichs ein Antialiasing und die Vermeidung von Spikes, die große Tiefenwerte mit steilem Anstieg enthalten, umfassen Die Schritte S100 bis S106 werden gemäß Ausführungsbeispielen zur Erzeugung einer 3D-Livesequenz bzw. eines 3D-Films für jeden Frame der Sequenz/des Films wiederholt, wobei jeder Frame ein Einzelbild der Sequenz/des Films ist. Gemäß Ausführungsbeispielen beträgt die Wiederholungsrate 30 Frames pro Sekunde, Gemäß Ausführungsbeispielen können Texturinformationen zwischen den Scheitelpunktwerten (Vertizeswerten) interpoliert werden und benötigen somit wenig Datenbreite.

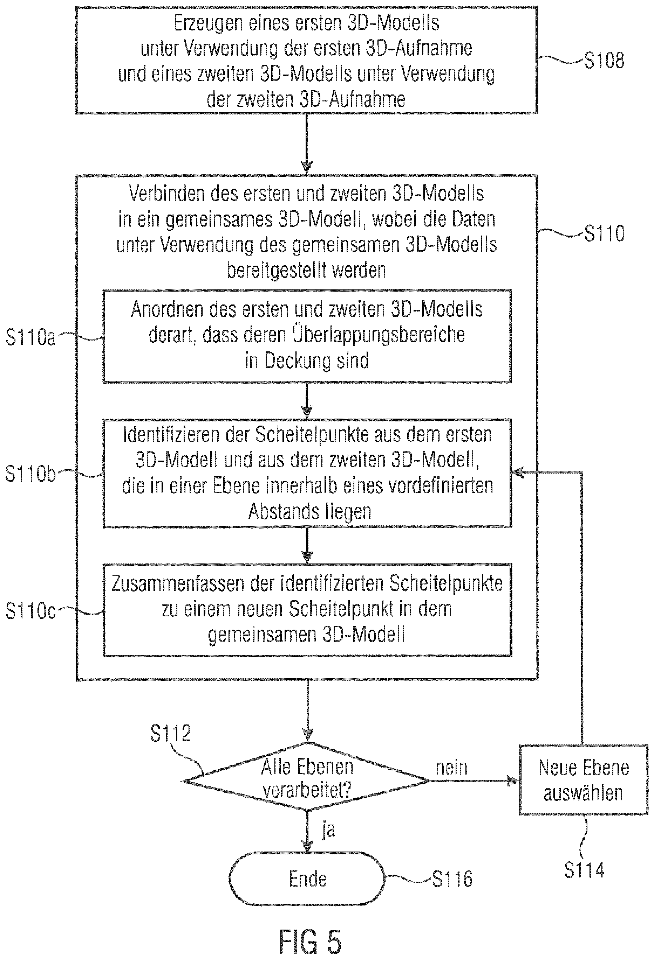

Fig. 5 zeigt ein Flussdiagramm mit weiteren Schritten gemäß Ausführungsbeispielen der Erfindung, bei denen das 3D-Modell unter Verwendung zumindest einer ersten 3D-Aufnahme und einer zweiten 3D-Aufnahme des Objekts aus jeweils unterschiedlichen, sich zumindest teilweise überlappenden Positionen erzeugt wird. Im Schritt S108 wird ein erstes 3D-Modell unter Verwendung der ersten 3D-Aufnahme und ein zweites 3D-Modell unter Verwendung der zweiten 3D-Aufnahme erzeugt. Im Schritt S110 werden das erste 3D-Modell und das zweite 3D-Modell verbunden, um ein gemeinsames 3D-Modell zu erzeugen, wobei die Daten, die im Schritt S102 (siehe Fig. 4) bereitgestellt werden, unter Verwendung des gemeinsamen 3D-Modells erzeugt und bereitgestellt werden. Das Verbinden der zwei 3D-Modelle umfasst gemäß dem dargestellten Ausführungsbeispiel den Schritt S110a, bei dem die zwei 3D-Modelle so angeordnet werden, dass deren Überlappungsbereiche in Deckung sind. Im Schritt S110b werden die Scheitelpunkte definiert, die innerhalb eines vordefinierten Abstands liegen, und die identifizierten Scheitelpunkte werden im Schritt S110c zusammengefasst. Die Schritte S110a bis S110c werden wiederholt, wenn im Schritt S112 festgestellt wird, dass noch nicht alle vorbestimmten Ebenen betreffend das 3D-Modell abgearbeitet wurden. In diesem Fall wird im Schritt S114 eine weitere Ebene ausgewählt, und das Verfahren kehrt zum Schritt S110b zurück. Anderenfalls, wenn im Schritt S112 festgestellt wird, dass alle Ebenen abgearbeitet wurden, endet das Verfahren im Schritt 116.

Die anhand der Fig. 4 und 5 beschriebenen Ausführungsbeispiele wurden im Zusammenhang mit der Erzeugung von 3D-Darstellungen für ein Objekt oder für eine Person erläutert, allerdings ist die vorliegende Erfindung nicht hierauf beschränkt. Gemäß anderen Ausführungsbeispielen kann das Objekt auch der Hintergrund eines Raumes sein, der empfängerseitig derart angezeigt werden soll, dass ein Benutzer auf der Empfängerseite den Raum aus verschiedenen Perspektiven betrachten kann und sich innerhalb vorbestimmter Grenzen auch innerhalb des Raumes bewegen kann. In diesem Fall umfasst die 3D-Aufnahme eine 3D-Aufnahme des Hintergrunds eines Raumes, beispielsweise entsprechend den Schritten S100 bis S116, jedoch ohne den Schritt S104, da eine Entfernung des Hintergrunds an dieser Stelle natürlich nicht sinnvoll ist. Im Verfahren gemäß der Fig. 5 erfolgt durch die Schritte im Block S110 eine Verbindung der verschiedenen Aufnahmen des Innenraumes, um die Innenhülle des Raumes zu erzeugen. Gemäß Ausführungsbeispielen kann vorgesehen sein, bei einer Darstellung des so erzeugten dreidimensionalen Raumes auf der Empfängerseite einen Bereich, beispielsweise einen kreisförmigen Bereich, zu definieren, in dem sich ein Benutzer "frei bewegen" kann, um so die Illusion eines Live-3D-Films zu erhalten.

Nachfolgend wird ein weiteres Ausführungsbeispiel des erfindungsgemäßen Ansatzes näher erläutert, bei dem eine Möglichkeit eröffnet wird, ein menschliches Gesicht zu verändern. Bei solchen Ansätzen geht es darum, eine Aufnahme einer Person, die einer anderen, beispielsweise bekannten Persönlichkeit, ähnlich sieht, beispielsweise im Bereich des Gesichts so weit zu modifizieren, dass die Ähnlichkeit noch größer wird. Gemäß der vorliegenden Erfindung wird bei diesem Ausführungsbeispiel eine Änderung des 3D-Modells bzw. des Dreiecksnetzes mit hoher Frequenz bewirkt, und die sich ergebende Animation besteht, wie bei einem Film aus einer Folge von komplett neuen Dreiecksnetzen, die hintereinander angezeigt werden, um dem menschlichen Betrachter den Anschein eines sich bewegenden Bilds zu vermitteln. Dies hat zur Folge, dass für das menschliche Auge eine kontinuierliche Bewegung in drei Dimensionen entsteht, da die Augen die diskreten Zustände nicht mehr unterscheiden können, da sie zu schnell aufeinanderfolgen. Stellt man diese Änderungen schnell genug auf einem autostereoskopischen Monitor dar, so entsteht für einen mit zwei Augen sehenden Menschen eine Hologramm-Illusion. Gemäß der vorliegenden Erfindung kann diese Hologramm-Illusion zur Laufzeit verändert werden.

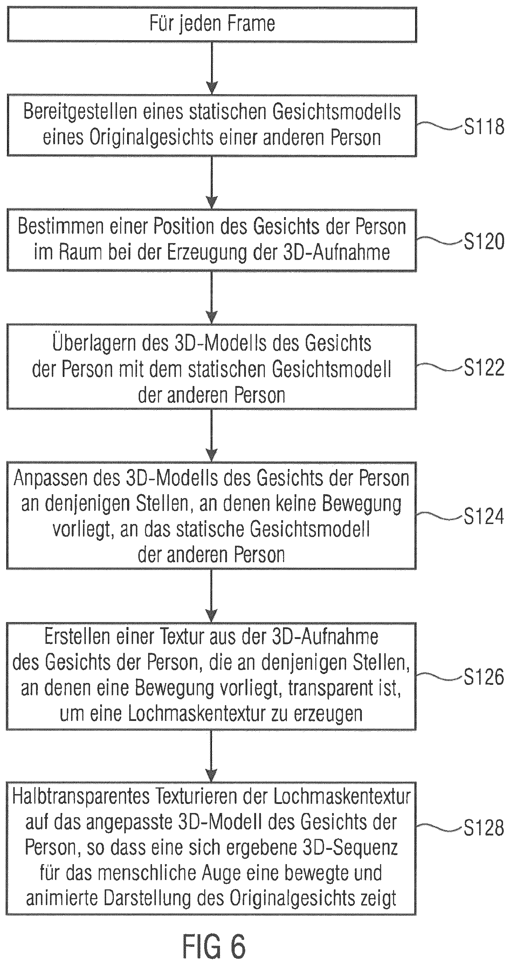

Die Fig. 6 zeigt ein Flussdiagramm, welches das Ausführungsbeispiel des erfindungsgemäßen Verfahrens zur Veränderung eines menschlichen Gesichts verdeutlicht. Das Verfahren basiert auf einem Objekt, welches das Gesicht einer Person darstellt, und in einem Schritt S118 wird zunächst ein statisches Gesichtsmodell eines Originalgesichts einer anderen Person bereitgestellt. Die erste Position kann beispielsweise eine sogenannte Look-a-Like-Person sein, die der anderen Person, beispielsweise einer bekannten Person, ähnlich sieht. Das Gesichtsmodell des Originalgesichts der anderen Person ist ein statisches 3D-Modell mit Textur, das beispielsweise aus einer Photo- oder Filmaufnahme der anderen Person entstanden ist und somit einen entsprechend hohen Wiedererkennungseffekt haben kann.

im Schritt S120 wird eine Position des Gesichts der Person im Raum bei der Erzeugung der 3D-Aufnahme bestimmt. Hierzu kann beispielsweise eine Positionsbestimmungsanlage, z.B. Nexonar, ein mit einem Sonarsensor bestücktes Gerät, das am Hinterkopf getragen wird, oder ein Raycasting verwendet werden. Nach Feststellung der Position des Gesichts wird im Schritt S122 das 3D-Modell des Gesichts der Person mit dem statischen Gesichtsmodell der anderen Person überlagert und im Schritt S124 erfolgt eine Anpassung des 3D-Modells des Gesichts der Person an denjenigen Stellen, an denen keine Bewegung vorliegt, an das statische Gesichtsmodell der anderen Person. Hierfür kann beispielsweise die Differenz aus den beiden 3D-Modellen oder Dreiecksgittern an denjenigen Stellen addiert werden, an denen sich keine Bewegung findet, z.B. im Bereich der Nase, der Wangen und Ähnlichem, so dass sich ein gemeinsames 3D-Modell oder 3D-Mesh ergibt, welches sich, aufgrund der Tatsache, dass die gerade beschriebenen Schritte für jeden Frame/jedes Einzelbild des 3D-Films durchgeführt werden, zur Laufzeit aktualisiert.

Im Schritt S126 wird eine Textur aus der 3D-Aufnahme des Gesichts der Person erstellt, und zwar an denjenigen Stellen, an denen eine Bewegung vorliegt, um eine Lochmaskentextur zu erzeugen, die im Schritt S128 halbtransparent auf das gemeinsame oder neue 3D-Modell texturiert wird, um so zur Laufzeit ein 3D-Modell zu erhalten, das für die menschlichen Augen als eine Sequenz einer bewegten und animierten Darstellung des Originalgesichts erkennbar ist.

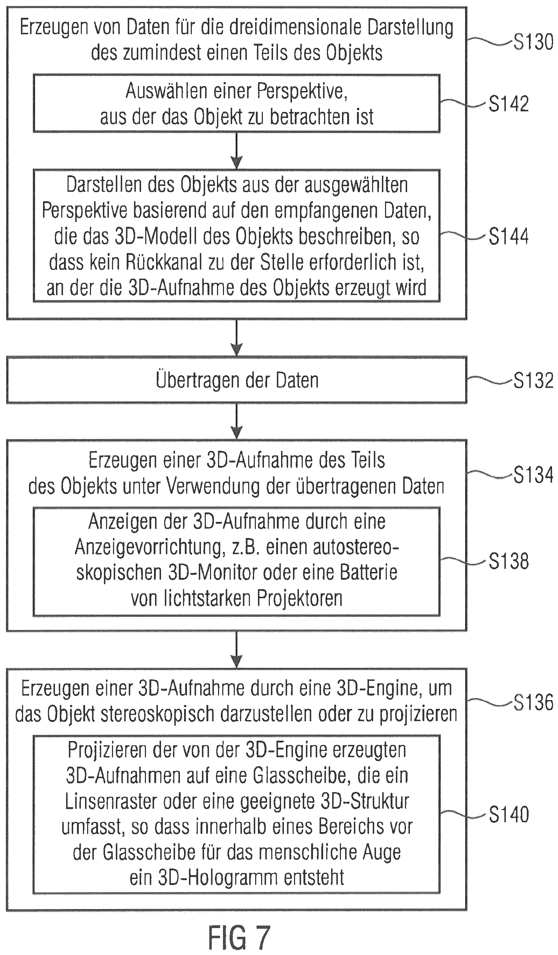

Anhand der Fig. 7 wird nachfolgend ein Ausführungsbeispiel des erfindungsgemäßen Verfahrens zum Erzeugen einer dreidimensionalen Darstellung zumindest eines Teils eines Objekts näher erläutert, wie es beispielsweise durch das anhand der Fig. 2 beschriebene System durchgeführt wird. In einem ersten Schritt S130 werden Daten für die dreidimensionale Darstellung des zumindest einen Teils des Objekts erzeugt, und zwar entsprechend dem oben beschriebenen Verfahren, wie es beispielsweise anhand der Fig. 4, 5 und 6 erläutert wurde oder wie es anhand der Empfängerseite 202 in Fig. 2 erläutert wurde. Nachfolgend wird im Schritt S132 eine Übertragung der Daten über das Übertragungsmedium 106 von der Senderseite 202 zu der Empfängerseite 204 (siehe Fig. 2) durchgeführt, und im Schritt S134 werden die in Fig. 2 gezeigten 3D-Aufnahmen 100a und 100b, beispielsweise durch die 3D-Engine 210 auf Empfängerseite 204 erzeugt. Wie in Fig. 7 im Schritt S136 gezeigt ist, erfolgt die Erzeugung der 3D-Aufnahme durch eine 3D-Engine, um das Objekt stereoskopisch darzustellen oder zu projizieren. Gemäß einem Ausführungsbeispiel (siehe den Schritt S138) wird die 3D-Aufnahme durch eine Anzeigevorrichtung, z.B. einen autostereoskopischen 3D-Monitor 108 oder eine Batterie von lichtstarken Projektoren angezeigt.

Vor der Übertragung im Schritt S132 können die im Schritt S130 erzeugten Daten gemäß Ausführungsbeispiel nochmals durch eine Quantisierung geeignet reduziert werden, jedoch unter Inkaufnahme eines Datenverlusts. Ferner kann gemäß anderen Ausführungsbeispielen vorgesehen sein, auf die durch den Schritt S130 bereitgestellte Datenmenge bereits eine Region of Interest Encoding (Rol-Kodierung) anzuwenden, ebenso ist eine Differenz-Kodierung einzelner, aufeinanderfolgender Frames/Elnzelbilder denkbar. Ferner kann die Datenmenge binär kodiert werden und weiter reduziert werden, z.B. durch eine Lauflängenkodierung und ähnliche, im Stand der Technik bekannte Ansätze.

Die Übertragung im Schritt S132 kann über das Internet oder ein Intranet erfolgen, beispielsweise durch eine Client-Server-Beziehung unter Verwendung des TCP-IP-Protokolls, des UDP-Protokolls oder des Serverside-Protokolls. Alternativ oder zusätzlich kann die Übertragung S132 auch zu einer lokalen Abspeicherung der empfangenen Einzelbilder/Frames als lokale Datei führen.

Im Schritt S134 kann vor dem Bereitstellen der Daten an die 3D-Engine 210 ein Entpacken der Daten entsprechend der Kodierung derselben vor der Übertragung und ein Puffern derselben vorgesehen sein, wobei das Puffern vorgesehen ist, um sicherzustellen, dass nach Erreichen eines anfänglichen, erwünschten Füllzustands ein kontinuierliches Verarbeiten der Datenpakete möglich ist, auch bei unterschiedlichen oder variierenden Datenraten, mit denen die entsprechenden Datenpakete am Empfänger empfangen werden.

Gemäß einer Ausführungsform kann der Schritt S138 ein Anzeigen unter Verwendung des stereoskopischen 3D-Pepper's-Ghost-Verfahrens zur Erzeugung von Hologrammen umfassen, wie dies im Schritt S140 dargestellt ist, bei dem ein autostereoskopischer 3D-Monitor oder eine Batterie von lichtstarken Projektoren vorgesehen ist, um geeignete 3D-Bilder, beispielsweise die von der 3D-Engine 210 erzeugten Bilder 100a, 100b (siehe Fig. 2), auf eine Glasscheibe zu projizieren, die ein Linsenraster oder eine geeignete 3D-Struktur umfasst, so dass in einer vorbestimmten Blickrichtung vor der Glasscheibe für das menschliche Auge ein 3D-Hologramm entsteht.

Gemäß weiteren Ausführungsbeispielen kann vorgesehen sein, dass beispielsweise ein Benutzer empfängerseitig eine Perspektive auswählt, aus der das Objekt zu betrachten ist, wie dies im Schritt S142 angegeben ist, und entsprechend dem Schritt S144 wird das Objekt anschließend aus der gewählten Perspektive dargestellt, basierend auf den empfangenen Daten, die das 3D-Modell des Objekts beschreiben, ohne dass ein Rückkanal zu der Stelle erforderlich ist, an der die 3D-Aufnahme des Objekts erzeugt wird. Dies ist ein besonderes bevorzugtes Ausführungsbeispiel der vorliegenden Erfindung, da an der Empfängerseite ein 3D-Modell des Objekts oder eines Teils des Objekts erzeugt wird, welches auf die oben beschriebene Art und Weise an die Empfängerseite übertragen wird, mit einer reduzierten Datenmenge, und an der Empfängerseite unter Zugrundelegung einer entsprechenden 3D-Engine die Rückgewinnung des ursprünglichen 3D-Modells ermöglicht, so dass die gesamte 3D-Darstellung des Objekts an der Empfängerseite vorliegt, Wurde z.B. das gesamte Objekt als 3D-Modell erfasst und verarbeitet, so wird an der Empfängerseite die Möglichkeit geschaffen, dass ein Benutzer eine Perspektive frei auswählt, mit der er auf das entsprechende Objekt blicken möchte, und entsprechend der ausgewählten Perspektive werden die für die entsprechende Darstellung erforderlichen 3D-Aufnahmen aus dem 3D-Modell an der Empfängerseite erzeugt. Somit kann empfängerseitig frei bestimmt werden, aus welcher Perspektive bzw. welchen Blickwinkeln ein 3D-Modell zu betrachten ist, so dass dann die entsprechenden 3D-Aufnahmen für die Darstellung auf dem empfängerseitigen Monitor generiert werden können, ohne dass es einer Neuaufnahme und damit einer Neuübertragung der Daten oder eines Rückkanals an den Sender bedarf. Diese Ausgestaltung wird vorzugsweise bei folgenden Anwendungen verwendet:
- Präsentationen auf Messen oder Shows mit Glasscheibe in Menschengröße oder größer;
- Kommunikationsanwendung im Schreibtisch, z.B. in Form einer Glasscheibe in Monitorgröße, die aus dem Schreibtisch herausfahrbar ist, auf der ein Hologramm des Gesichts eines Gesprächspartners erscheint;
- im Wohnbereich, in dem eine Glasscheibe mit Projektionshardware in beliebiger Größe aufgestellt ist, oder Außenfensterscheiben, so dass ein oder mehrere Gesprächspartner im Wohnbereich stehend als Hologramm darstellbar sind.

Die erfindungsgemäße Vorgehensweise, wie sie oben anhand der verschiedenen Ausführungsbeispiele im Detail beschrieben wurde, wird gemäß Ausführungsbeispielen vorzugsweise bei folgenden Anwendungen eingesetzt:
- Interaktiver und immersiver 3D Film für Filminhalte jeglicher Art;
- Kommunikation in Multi-User 3D Welten, z.B. für E-Learning, Edutainment, Vertrieb, Politik, Unterhaltung, Shows;
- realistischere Avatare für Spiele und Unterhaltung;
- virtuelle Greeter als Menschendarstellungen zur lokalen Kommunikation mit Menschen;
- virtuelle Spiegel, die verschiedene Kleider am Menschen anzeigen;
- Überwachung von Maschinen in Produktionsanlagen im Rahmen von Industrie 4.0 und Internet der Dinge und Logistik, Betrieb und Beschaffung von Verschleißteilen;
- Überwachung von Menschen in kritischen Infrastrukturen, z.B. Grenzüberwachung;
- Training und Simulation von gefährlichen oder nicht existierenden Umgebungen mit menschlichen Interaktionen.

Ferner findet die vorliegende Erfindung Anwendung bei der Überwachung als Darstellung und Übertragung von sich ändernden Inhalten. Für einige Anwendungen ist die Überwachung, Erkennung und Übertragung von sich ändernden Inhalten besonders wichtig. Hierbei werden Differenzen eines statischen 3D-Modells in bestimmten Grenzen (Schwellenwerte) zu einem aufgenommenen Livebild erzeugt, um Änderungen schneller und genauer als in einem 2D-Videobild zu erkennen. Beispielsweise sei die Überwachung einer Bohranlage betrachtet. Ein statisches 3D-Modell der Bohranlage wird mehrfach pro Sekunde mit einer 3D-Aufnahme aus einem Blickwinkel auf die Bohranlage verglichen, wobei beispielsweise die Bohranlage während der Laufzeit über die 3D-Engine animiert werden kann. Änderungen im Live-3D-Modell, wie beispielsweise das Eintreten eines Menschen in einen Aufnahmebereich, werden mit dem statischen 3D-Modell verglichen und können Alarme auslösen. Für eine 3D-Sicht der Situation und der Lage der Anlage mit dem Menschen ist nur die Übertragung der Unterschiede nötig, da die statische Anlage bereits als 3D-Modell vorliegt, was gegenüber der vollständigen Videoübertragung in Bezug auf Datenmenge, Geschwindigkeit, 3D-Raumansicht mit interaktiven Blickpunkt und Darstellungsqualität sowie Güte der Visualisierung vorteilhaft ist.

Ausführungsbeispiele wurden im Zusammenhang mit der 3D-Darstellung eines Objekts oder eines Teils des Objekts beschrieben. Gemäß weiteren Ausführungsbeispielen kann der erfindungsgemäße Ansatz auch bei einer zweidimensionalen Darstellung des Objekts oder des Teils des Objekts eingesetzt werden, z.B. indem die erfindungsgemäß erzeugten Daten, die das 3D-Modell wiedergeben, empfängerseitig nur als 2D-Bilder bzw. als 2D-Bildfolge aufbereitet und zur Anzeige gebracht werden. Auch in diesem Fall ergeben sich die oben erwähnten Vorteile gegenüber einer herkömmlichen Übertragung von 2D-Bildern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zum Erzeugen von Daten für eine zwei- oder dreidimensionale Darstellung zumindest eines Teils eines Objekts (100), mit:
Erzeugen (S100) eines 3D-Modells (208) des Teils des Objekts (100) unter Verwendung einer 3D-Aufnahme (100a, 100b) des Teils des Objekts (100); und
Bereitstellen (S102) von Daten unter Verwendung des 3D-Modells (208), die die Scheitelpunkte des Teils des Objekts (100) im dreidimensionalen Raum und die den Scheitelpunkten zugeordneten Farbwerte beschreiben,
**dadurch gekennzeichnet, dass**
das 3D-Modell (208) unter Verwendung zumindest einer ersten 3D-Aufnahme und einer zweiten 3D-Aufnahme des Objekts (100) aus jeweils unterschiedlichen Positionen erzeugt wird, wobei die erste und zweite 3D-Aufnahme zumindest teilweise überlappen,
das Verfahren folgende Schritte umfasst:
Erzeugen (S108) eines ersten 3D-Modells unter Verwendung der ersten 3D-Aufnahme und eines zweiten 3D-Modells unter Verwendung der zweiten 3D-Aufnahme; und
Verbinden (S110) des ersten und zweiten 3D-Modells in ein gemeinsames 3D-Modell (208), wobei die Daten unter Verwendung des gemeinsamen 3D-Modells (208) bereitgestellt werden,
das Bereitstellen (S102) der Daten ein Reduzieren der Datenmenge ohne Datenverlust umfasst, wobei das Reduzieren Folgendes umfasst:
Bestimmen der räumlichen Abstände der Scheitelwerte; und
Kodieren der räumlichen Abstände als Folgedifferenzen ausgehend von einem vorgegebenen Startpunkt, und
das Reduzieren der Datenmenge folgendes umfasst:
beginnend mit einer vorgegebenen Ebene, beispielsweise einer horizontalen Ebene (X-Z-Ebene), Identifizieren derjenigen Scheitelpunkte, die einen vorbestimmten Abstand zueinander aufweisen,
Zusammenfassen der identifizierten Punkte bis eine Punktmenge, beispielsweise eine kreisförmige Punktmenge, auf der Ebene gefunden ist,
Wiederholen des Identifizierens und des Zusammenfassens auf einer nächst höheren Ebene bis die relevanten Scheitelpunkte für eine Außenhülle des Objekts gefunden sind.

2. Verfahren zum Erzeugen von Daten für eine zwei- oder dreidimensionale Darstellung zumindest eines Teils eines Objekts (100), mit:
Erzeugen (S100) eines 3D-Modells (208) des Teils des Objekts (100) unter Verwendung einer 3D-Aufnahme (100a, 100b) des Teils des Objekts (100); und
Bereitstellen (S102) von Daten unter Verwendung des 3D-Modells (208), die die Scheitelpunkte des Teils des Objekts (100) im dreidimensionalen Raum und die den Scheitelpunkten zugeordneten Farbwerte beschreiben,
wobei das Erzeugen (S100) des 3D-Modells (208) und das Bereitstellen (S102) der Daten mit einer vorbestimmten Wiederholungsrate wiederholt werden, um eine Vielzahl von zeitlich aufeinanderfolgenden Frames zu erzeugen, die jeweils die bereitgestellten Daten enthalten und als 3D-Sequenz anzeigbar sind,
**dadurch gekennzeichnet, dass**
das Bereitstellen (S102) der Daten ein Reduzieren der Datenmenge ohne Datenverlust umfasst, wobei das Reduzieren Folgendes umfasst:
Bestimmen der räumlichen Abstände der Scheitelwerte; und
Kodieren der räumlichen Abstände als Folgedifferenzen ausgehend von einem vorgegebenen Startpunkt, und
das Reduzieren der Datenmenge folgendes umfasst:
beginnend mit einer vorgegebenen Ebene, beispielsweise einer horizontalen Ebene (X-Z-Ebene), Identifizieren derjenigen Scheitelpunkte, die einen vorbestimmten Abstand zueinander aufweisen,
Zusammenfassen der identifizierten Punkte bis eine Punktmenge, beispielsweise eine kreisförmige Punktmenge, auf der Ebene gefunden ist,
Wiederholen des Identifizierens und des Zusammenfassens auf einer nächst höheren Ebene bis die relevanten Scheitelpunkte für eine Außenhülle des Objekts gefunden sind.

3. Verfahren nach Anspruch 1 oder 2, bei dem das das Kodieren der räumlichen Abstände als Folgedifferenzen folgendes umfasst:
ausgehend von einem vollständig kodierten Anfangspunkt, Definieren lediglich der Differenzwerte zu den Positionen benachbarter Scheitelpunkte, so dass sich die Reduzierung der Datenmenge ergibt, ohne dass ein Datenverlust eintritt.

4. Verfahren nach einem der Ansprüche 1 bis 3, bei dem der Abstand abhängig von einer Übertragung der Daten ausgewählt wird, so dass z.B. bei Kenntnis des Übertragungsmediums die Datenmenge an eine Bandbreite angepasst ist.

5. Verfahren nach einem der Ansprüche 1 bis 4, bei dem das Kodieren wird von einem unteren Punkt des Objekts (100) bis zu einem oberen Punkt des Objekts (100) spindelartig durchgeführt wird.

6. Verfahren nach Anspruch 2, das für eine oder mehrere der folgenden Anwendungen verwendet wird:
• interaktiver und immersiver 3D Film für Filminhalte jeglicher Art;
• Kommunikation in Multi-User 3D Welten, z.B. für E-Learning, Edutainment, Vertrieb, Politik, Unterhaltung, Shows;
• realistischere Avatare für Spiele und Unterhaltung;
• virtuelle Greeter als Menschendarstellungen zur lokalen Kommunikation mit Menschen;
• virtuelle Spiegel, die verschiedene Kleider am Menschen anzeigen;
• Überwachung von Maschinen in Produktionsanlagen im Rahmen von Industrie 4.0 und Internet der Dinge und Logistik, Betrieb und Beschaffung von Verschleißteilen;
• Überwachung von Menschen in kritischen Infrastrukturen, z.B. Grenzüberwachung;
• Training und Simulation von gefährlichen oder nicht existierenden Umgebungen mit menschlichen Interaktionen.

7. Verfahren nach Anspruch 1, bei dem die unterschiedlichen Positionen derart gewählt sind, dass ein Bereich des Objekts (100), der in der ersten 3D-Aufnahme des Objekts (100) nicht sichtbar ist, in der zweiten 3D-Aufnahme des Objekts (100) sichtbar ist.

8. Verfahren nach einem der Ansprüche 1 bis 7, bei dem das 3D-Modell (208) unter Verwendung einer Mehrzahl von 3D-Aufnahmen (100a, 100b) des Objekts (100) aus jeweils unterschiedlichen, zumindest teilweise überlappenden Positionen erzeugt wird, so dass das 3D-Modell (208) mehrere Abschnitte des Objekts (100) oder eine das vollständige Objekt (100) umfasst.

9. Verfahren nach einem der Ansprüche 1 bis 8, bei dem das Erzeugen (S100) des 3D-Modells (208) das Bereitstellen der 3D-Aufnahme (100a, 100b) des Objekts (100) durch eine 3D-Kamera (102, 104) oder das Bereitstellen einer stereoskopischen Aufnahme des Objekts (100) umfasst.

10. Verfahren nach einem der Ansprüche 1 bis 9, bei dem das Objekt (100) eine Person, einen Gegenstand oder einen Hintergrund umfasst.

11. Verfahren zum Erzeugen einer zwei- oder dreidimensionalen Darstellung zumindest eines Teils eines Objekts (100), mit:
Erzeugen (S130) von Daten für die zwei- oder dreidimensionale Darstellung des zumindest einen Teils des Objekts (100) gemäß einem Verfahren nach einem der Ansprüche 1 bis 10;
Übertragen (S132) der Daten; und
Erzeugen (S134) einer 2D- oder 3D-Aufnahme (100a, 100b) des Teils des Objekts (100) unter Verwendung der übertragenen Daten.

12. Computerprogramm mit Anweisungen zum Ausführen des Verfahrens gemäß einem der Ansprüche 1 bis 11, wenn die Anweisungen durch einen Computer ausgeführt werden.

13. Vorrichtung (202) zum Erzeugen von Daten für eine zwei- oder dreidimensionale Darstellung zumindest eines Teils eines Objekts (100), mit:
einem Eingang, der konfiguriert ist, um eine 3D-Aufnahme (100a, 100b) des Teils des Objekts (100) zu empfangen;
einer 3D-Engine (206), die mit dem Eingang verbunden ist und konfiguriert ist, um unter Verwendung der empfangenen 3D-Aufnahme (100a, 100b) ein 3D-Modell (208) des Teils des Objekts (100) zu erzeugen, und um unter Verwendung des 3D-Modells (208) Daten zu erzeugen, die die Scheitelpunkte des Teils des Objekts (100) im dreidimensionalen Raum und die den Scheitelpunkten zugeordneten Farbwerte beschreiben; und
einem Ausgang, der mit der 3D-Engine (206) verbunden ist und konfiguriert ist, um die erzeugten Daten bereitzustellen,
wobei der Eingang konfiguriert ist, um zumindest eine erste 3D-Aufnahme und eine zweite 3D-Aufnahme des Objekts (100) aus jeweils unterschiedlichen Positionen zu empfangen, wobei die erste und zweite 3D-Aufnahme zumindest teilweise überlappen, und bei der die 3D-Engine (206) konfiguriert ist, um das 3D-Modell (208) unter Verwendung der ersten 3D-Aufnahme und der zweiten 3D-Aufnahme des Objekts (100) zu erzeugen,
wobei die 3D-Engine (206) konfiguriert ist, um:
ein erstes 3D-Modell unter Verwendung der ersten 3D-Aufnahme und ein zweites 3D-Modell unter Verwendung der zweiten 3D-Aufnahme zu erzeugen; und
unter Verwendung des ersten und zweiten 3D-Modells ein gemeinsames 3D-Modell (208) zu erzeugen und die Daten unter Verwendung des gemeinsamen 3D-Modells (208) zu erzeugen,
wobei die 3D-Engine (206) zur Reduzierung der Datenmenge ohne Datenverlust konfiguriert ist, um
die räumlichen Abstände der Scheitelwerte zu bestimmen;
die räumlichen Abstände als Folgedifferenzen ausgehend von einem vorgegebenen Startpunkt bis einem Endpunkt spindelartig zu kodieren, und
wobei die 3D-Engine (206) zur Reduzierung der Datenmenge konfiguriert ist, um
beginnend mit einer vorgegebenen Ebene, beispielsweise einer horizontalen Ebene (X-Z-Ebene), diejenigen Scheitelpunkte zu identifizieren, die einen vorbestimmten Abstand zueinander aufweisen,
die identifizierten Punkte zusammenzufassen bis eine Punktmenge, beispielsweise eine kreisförmige Punktmenge, auf der Ebene gefunden ist,
das Identifizieren und des Zusammenfassen auf einer nächst höheren Ebene zu wiederholen bis die relevanten Scheitelpunkte für eine Außenhülle des Objekts gefunden sind.

14. Vorrichtung (202) zum Erzeugen von Daten für eine zwei- oder dreidimensionale Darstellung zumindest eines Teils eines Objekts (100), mit:
einem Eingang, der konfiguriert ist, um eine 3D-Aufnahme (100a, 100b) des Teils des Objekts (100) zu empfangen;
einer 3D-Engine (206), die mit dem Eingang verbunden ist und konfiguriert ist, um unter Verwendung der empfangenen 3D-Aufnahme (100a, 100b) ein 3D-Modell (208) des Teils des Objekts (100) zu erzeugen, und um unter Verwendung des 3D-Modells (208) Daten zu erzeugen, die die Scheitelpunkte des Teils des Objekts (100) im dreidimensionalen Raum und die den Scheitelpunkten zugeordneten Farbwerte beschreiben; und
einem Ausgang, der mit der 3D-Engine (206) verbunden ist und konfiguriert ist, um die erzeugten Daten bereitzustellen,
wobei die 3D-Engine (206) konfiguriert ist, um das 3D-Modell (208) und die Daten mit einer vorbestimmten Wiederholungsrate zu erzeugen, um eine Vielzahl von zeitlich aufeinanderfolgenden Frames zu erzeugen, die jeweils die bereitgestellten Daten enthalten und als 3D-Sequenz anzeigbar sind,
wobei die 3D-Engine (206) zur Reduzierung der Datenmenge ohne Datenverlust konfiguriert ist, um
die räumlichen Abstände der Scheitelwerte zu bestimmen;
die räumlichen Abstände als Folgedifferenzen ausgehend von einem vorgegebenen Startpunkt bis einem Endpunkt spindelartig zu kodieren, und
wobei die 3D-Engine (206) zur Reduzierung der Datenmenge konfiguriert ist, um
beginnend mit einer vorgegebenen Ebene, beispielsweise einer horizontalen Ebene (X-Z-Ebene), diejenigen Scheitelpunkte zu identifizieren, die einen vorbestimmten Abstand zueinander aufweisen,
die identifizierten Punkte zusammenzufassen bis eine Punktmenge, beispielsweise eine kreisförmige Punktmenge, auf der Ebene gefunden ist,
das Identifizieren und des Zusammenfassen auf einer nächst höheren Ebene zu wiederholen bis die relevanten Scheitelpunkte für eine Außenhülle des Objekts gefunden sind.

## Claims

1. A method of generating data for two- or three-dimensional depiction of at least part of an object (100), comprising:
generating (S100) a 3D model (208) of the part of the object (100) while using a 3D image (100a, 100b) of the part of the object (100); and
providing (S102), while using the 3D model (208), data describing the vertices of the part of the object (100) within the three-dimensional room and describing the color values associated with the vertices,
**characterized in that**
the 3D model (208) is generated while using at least a first 3D image and a second 3D image of the object (100) from different positions, respectively, wherein the first and second 3D images at least partly overlap, and
the method includes:
generating (S108) a first 3D model while using the first 3D image, and a second 3D model while using the second 3D image; and
combining (S110) the first and second 3D models to form a shared 3D model (208), the data being provided while using the shared 3D model (208),
wherein providing (S102) the data comprises reducing the amount of data without any loss of data, said reducing including:
determining the spatial distances of the vertices; and
encoding the spatial distances as sequential differences while starting from a predefined starting point.
wherein reducing the amount of data includes:
starting with a predefined plane, e.g. a horizontal plane (X-Z plane), identifying those vertices which exhibit predetermined mutual distances,
combining the points identified until a point set, e.g. a circular point set, has been found at the plane,
repeating of the identifying and the combining on a next higher plane till the relevant vertices for an outer shell of the object have been found.

2. A method of generating data for two- or three-dimensional depiction of at least part of an object (100), comprising:
generating (S100) a 3D model (208) of the part of the object (100) while using a 3D image (100a, 100b) of the part of the object (100); and
providing (S102), while using the 3D model (208), data describing the vertices of the part of the object (100) within the three-dimensional room and describing the color values associated with the vertices,
wherein generating (S100) the 3D model (208) and providing (S102) the data are repeated at a predetermined repetition rate so as to generate a multitude of successive frames, each of which contains the data provided and may be displayed as a 3D sequence,
**characterized in that**
providing (S102) the data comprises reducing the amount of data without any loss of data, said reducing including:
determining the spatial distances of the vertices; and
encoding the spatial distances as sequential differences while starting from a predefined starting point.
wherein reducing the amount of data includes:
starting with a predefined plane, e.g. a horizontal plane (X-Z plane), identifying those vertices which exhibit predetermined mutual distances,
combining the points identified until a point set, e.g. a circular point set, has been found at the plane,
repeating of the identifying and the combining on a next higher plane till the relevant vertices for an outer shell of the object have been found.

3. Method as claimed in claim 1 or 2, wherein encoding the spatial distances as sequential differences includes:
starting from a fully encoded starting point, defining only the values of difference as compared to the positions of the adjacent vertices, which results in the reduction of the amount of data without a loss of data.

4. Method as claimed in claim 1 to 3, wherein the distance is selected as a function of a transmission of data so that, e.g. when knowing the transmission medium, the amount of data is adapted to a bandwidth.

5. Method as claimed in claim 1 to 4, wherein encoding is performed, in the manner of a helix, from a lower point of the object (100) to an upper point of the object (100)

6. The method as claimed in claim 2, which is used for any one or more of the following applications:
• interactive and immersive 3D film for film contents of any kind;
• communication in multi-user 3D worlds, e.g., for E-learning, edutainment, distribution, politics, entertainment, shows;
• more realistic avatars for games and entertainment;
• virtual greeters as portrayals of persons for local communication with people;
• virtual mirrors which indicate different clothes on a person;
• monitoring of machines in production plants within the context of Industry 4.0 and Internet of Things and logistics, operation and procurement of wearing parts;
• surveillance of persons in critical infrastructures, e.g., border surveillance,
• training and simulation of dangerous or non-existing environments with human interactions.

7. The method as claimed in claim 1, wherein the different positions are selected such that an area of the object (100) that is not visible in the first 3D image of the object (100) will be visible in the second 3D image of the object (100).

8. The method as claimed in any of claims 1 to 7, wherein the 3D model (208) is generated while using a plurality of 3D images (100a, 100b) of the object (100) which are captured from respectively different, at least partly overlapping positions, so that the 3D model (208) includes several portions of the object (100) or the entire object (100).

9. The method as claimed in any of claims 1 to 8, wherein generating (S100) of the 3D model (208) includes providing the 3D image (100a, 100b) of the object (100) by a 3D camera (102, 104) or providing a stereoscopic image of the object (100).

10. The method as claimed in any of claims 1 to 9, wherein the object (100) includes a person, a thing or a background.

11. A method of generating data for two- or three-dimensional depiction of at least part of an object (100), comprising:
generating (S130) data for the three-dimensional depiction of the at least one part of the object (100) according to a method as claimed in claims 1 to 10;
transmitting (S132) the data; and
generating (S134) a 2D or 3D image (100a, 100b) of the part of the object (100) while using the transmitted data.

12. A computer program comprising instructions for performing the method as claimed in any of claims 1 to 11, when the instructions are performed by a computer.

13. A device (202) for generating data for two- or three-dimensional depiction of at least part of an object (100), comprising:
an input configured to receive a 3D image (100a, 100b) of the part of the object (100);
a 3D engine (206) connected to the input and configured to generate a 3D model (208) of the part of the object (100) while using the received 3D image (100a, 100b), and to generate, while using the 3D model (208), data describing the vertices of the part of the object (100) in the three-dimensional room and describing the color values associated with the vertices; and
an output connected to the 3D engine (206) and configured to provide the data generated,
wherein the input is configured to receive at least a first 3D image and a second 3D image of the object (100) from different positions, respectively, wherein the first and second 3D images at least partly overlap, and wherein the 3D engine (206) is configured to generate the 3D model (208) while using the first 3D image and the second 3D image of the object (100),
wherein the 3D engine (206) is configured to:
generate a first 3D model while using the first 3D image, and a second 3D model while using the second 3D image; and
while using the first and second 3D models, generate a shared 3D model (208) and generate the data while using the shared 3D model (208),
wherein the 3D engine (206) is configured to reduce the amount of data without any loss of data, so as to
determine the spatial distances of the vertices; and
encode the spatial distances as sequential differences while starting from a predefined starting point.
wherein the 3D engine (206) is configured to reduce the amount of data, so as to:
starting with a predefined plane, e.g. a horizontal plane (X-Z plane), identify those vertices which exhibit predetermined mutual distances,
combine the points identified until a point set, e.g. a circular point set, has been found at the plane,
repeat the identifying and the combining on a next higher plane till the relevant vertices for an outer shell of the object have been found.

14. A device (202) for generating data for two- or three-dimensional depiction of at least part of an object (100), comprising:
an input configured to receive a 3D image (100a, 100b) of the part of the object (100);
a 3D engine (206) connected to the input and configured to generate a 3D model (208) of the part of the object (100) while using the received 3D image (100a, 100b), and to generate, while using the 3D model (208), data describing the vertices of the part of the object (100) in the three-dimensional room and describing the color values associated with the vertices; and
an output connected to the 3D engine (206) and configured to provide the data generated,
wherein the 3D engine (206) is configured to generate the 3D model (208) and the data at a predetermined repetition rate so as to generate a multitude of successive frames, each of which contains the data provided and may be displayed as a 3D sequence,
wherein the 3D engine (206) is configured to reduce the amount of data without any loss of data so as to
determine the spatial distances of the vertices; and
encode the spatial distances as sequential differences while starting from a predefined starting point.
wherein the 3D engine (206) is configured to reduce the amount of data so as to:
starting with a predefined plane, e.g. a horizontal plane (X-Z plane), identify those vertices which exhibit predetermined mutual distances,
combine the points identified until a point set, e.g. a circular point set, has been found at the plane,
repeat the identifying and the combining on a next higher plane till the relevant vertices for an outer shell of the object have been found.

## Revendications

1. Procédé pour générer des données pour une représentation bidimensionnelle ou tridimensionnelle d'au moins une partie d'un objet (100), avec le fait de:
générer (S100) un modèle 3D (208) de la partie de l'objet (100) à l'aide d'une prise de vue 3D (100a, 100b) de la partie de l'objet (100); et
fournir (S102), à l'aide du modèle 3D (208), des données qui décrivent les sommets de la partie de l'objet (100) dans l'espace tridimensionnel et les valeurs de couleur associées aux sommets,
**caractérisé par le fait que**
le modèle 3D (208) est généré à l'aide d'au moins une première prise de vue 3D et d'une deuxième prise de vue 3D de l'objet (100) à partir de positions différentes respectives, où la première et la deuxième prise de vue 3D viennent au moins partiellement en chevauchement,
le procédé comporte les étapes suivantes consistant à:
générer (S 108) un premier modèle 3D à l'aide de la première prise de vue 3D et un deuxième modèle 3D à l'aide de la deuxième prise de vue 3D; et
connecter (S110) le premier et le deuxième modèle 3D pour obtenir un modèle 3D (208) commun, où les données sont fournies à l'aide du modèle 3D (208) commun,
la fourniture (S102) des données comporte une réduction de la quantité de données sans perte de données, où la réduction comporte le fait de:
déterminer les distances spatiales des valeurs de crête; et
coder les distances spatiales sous forme de différences successives en partant d'un point de départ prédéterminé, et
la réduction de la quantité de données comporte le fait de:
en commençant par un plan prédéterminé, par exemple un plan horizontal (plan X-Z), identifier les sommets qui présentent une distance prédéterminée entre eux,
regrouper les points identifiés jusqu'à ce que soit trouvée une quantité de points, par exemple une quantité de points de forme circulaire, sur le plan,
répéter l'identification et le regroupement à un niveau immédiatement supérieur jusqu'à ce que soient trouvés les sommets pertinents pour une coque extérieure de l'objet.

2. Procédé de génération de données pour une représentation bidimensionnelle ou tridimensionnelle d'au moins une partie d'un objet (100), avec le fait de:
générer (S100) un modèle 3D (208) de la partie de l'objet (100) à l'aide d'une prise de vue 3D (100a, 100b) de la partie de l'objet (100); et
fournir (S 102) les données, à l'aide du modèle 3D (208), qui décrivent les sommets de la partie de l'objet (100) dans l'espace tridimensionnel et les valeurs de couleur associées aux sommets,
dans lequel la génération (S100) du modèle 3D (208) et la fourniture (S 102) des données sont répétées à un taux de répétition prédéterminé pour générer une pluralité de trames successives dans le temps qui contiennent, chacune, les données fournies et qui peuvent être affichées sous forme de séquence 3D,
**caractérisé par le fait que**
la fourniture (S 102) des données comporte une réduction de la quantité de données sans perte de données, où la réduction comporte le fait de:
déterminer les distances spatiales des valeurs de crête; et
coder les distances spatiales sous forme de différences successives en partant d'un point de départ prédéterminé, et
la réduction de la quantité de données comporte le fait de:
en commençant par un plan prédéterminé, par exemple un plan horizontal (plan X-Z), identifier les sommets qui présentent une distance prédéterminée entre eux,
regrouper les points identifiés jusqu'à ce que soit trouvée une quantité de points, par exemple une quantité de points de forme circulaire, sur le plan,
répéter l'identification et le regroupement à un niveau immédiatement supérieur jusqu'à ce que soient trouvés les sommets pertinents pour une coque extérieure de l'objet.

3. Procédé selon la revendication 1 ou 2, dans lequel le codage des distances spatiales sous forme de différences successives comporte le fait de:
en partant d'un point de départ entièrement codé, définir uniquement les valeurs de différence aux positions de sommets voisins, de sorte qu'il en résulte la réduction de la quantité de données sans qu'il ne se produise une perte de données.

4. Procédé selon l'une des revendications 1 à 3, dans lequel la distance est choisie en fonction d'une transmission des données, de sorte que, par exemple, en cas de connaissance du support de transmission, la quantité de données soit adaptée à une largeur de bande.

5. Procédé selon l'une des revendications 1 à 4, dans lequel le codage est effectué en forme de fuseau d'un point inférieur de l'objet (100) à un point supérieur de l'objet (100).

6. Procédé selon la revendication 2, qui est utilisé pour une ou plusieurs des applications suivantes:
• film 3D interactif et immersif pour des contenus de film de tout type;
• communication dans des mondes 3D multi-utilisateurs, par exemple pour l'apprentissage en ligne, le divertissement éducatif, la commercialisation, la politique, le divertissement, les spectacles;
• des avatars plus réalistes pour les jeux et le divertissement;
• des accueils virtuels comme représentations de personnes pour la communication locale avec les personnes;
• des miroirs virtuels qui montrent différents vêtements sur des personnes;
• surveillance des machines dans les usines de production dans le cadre de l'Industrie 4.0 et de l'Internet des objets et de la logistique, de l'exploitation et de l'approvisionnement de pièces d'usure;
• surveillance des personnes dans les infrastructures critiques, par exemple surveillance des frontières;
• formation et simulation d'environnements dangereux ou non existants à interactions humaines.

7. Procédé selon la revendication 1, dans lequel les différentes positions sont choisies de sorte qu'une zone de l'objet (100) qui n'est pas visible dans la première prise de vue 3D de l'objet (100) soit visible dans la deuxième prise de vue 3D de l'objet (100).

8. Procédé selon l'une des revendications 1 à 7, dans lequel le modèle 3D (208) est généré à l'aide d'une pluralité de prises de vue 3D (100a, 100b) de l'objet (100) à partir de positions différentes venant au moins partiellement en chevauchement, de sorte que le modèle 3D (208) comporte plusieurs segments de l'objet (100) ou l'objet complet (100).

9. Procédé selon l'une des revendications 1 à 8, dans lequel la génération (S100) du modèle 3D (208) comporte le fait de fournir la prise de vue 3D (100a, 100b) de l'objet (100) par une caméra 3D (102, 104) ou de fournir une prise de vue stéréoscopique de l'objet (100).

10. Procédé selon l'une des revendications 1 à 9, dans lequel l'objet (100) comporte une personne, un objet ou un arrière-plan.

11. Procédé de génération d'une représentation bidimensionnelle ou tridimensionnelle d'au moins une partie d'un objet (100), avec le fait de:
générer (S130) les données pour la représentation bidimensionnelle ou tridimensionnelle d'au moins une partie de l'objet (100) selon un procédé selon l'une des revendications 1 à 10;
transmettre (S132) les données; et
générer (S134) une prise de vue 2D ou 3D (100a, 100b) de la partie de l'objet (100) à l'aide des données transmises.

12. Programme d'ordinateur avec des instructions pour la mise en oeuvre du procédé selon l'une des revendications 1 à 11 lorsque les instructions sont exécutées par un ordinateur.

13. Dispositif (202) pour générer les données pour une représentation bidimensionnelle ou tridimensionnelle d'au moins une partie d'un objet (100), avec:
une entrée qui est configurée pour recevoir une prise de vue 3D (100a, 100b) de la partie de l'objet (100);
un moteur 3D (206) qui est connecté à l'entrée et qui est configuré pour générer, à l'aide de la prise de vue 3D reçue (100a, 100b), un modèle 3-D (208) de la partie de l'objet (100), et pour générer, à l'aide du modèle 3-D (208), des données qui décrivent les sommets de la partie de l'objet (100) dans l'espace tridimensionnel et les valeurs de couleur associées aux sommets; et
une sortie qui est connectée au moteur 3D (206) et qui est configurée pour fournir les données générées,
dans lequel l'entrée est configurée pour recevoir au moins une première prise de vue 3D et une deuxième prise de vue 3D de l'objet (100) à partir de positions différentes respectives, où la première et la deuxième prise de vue 3D viennent au moins partiellement en chevauchement, et dans lequel le moteur 3D (206) est configuré pour générer le modèle 3D (208) à l'aide de la première prise de vue 3D et de la deuxième prise de vue 3D de l'objet (100),
dans lequel le moteur 3D (206) est configuré pour:
créer un premier modèle 3D à l'aide de la première prise de vue 3D et un deuxième modèle 3D à l'aide de la deuxième prise de vue 3D; et
générer, à l'aide du premier et du deuxième modèle 3D, un modèle 3D (208) commun et générer les données à l'aide du modèle 3D (208) commun,
dans lequel le moteur 3D (206) est configuré pour réduire la quantité de données sans perte de données, pour
déterminer les distances spatiales des valeurs de crête;
coder en forme de fuseau les distances spatiales sous forme de différences successives à partir d'un point de départ prédéterminé jusqu'à un point de fin, et
dans lequel le moteur 3D (206) est configuré pour réduire la quantité de données, pour
identifier, en commençant par un plan prédéterminé, par exemple un plan horizontal (plan X-Z), les sommets qui présentent une distance prédéterminée entre eux,
regrouper les points identifiés jusqu'à ce que soit trouvée une quantité de points, par exemple une quantité de points de forme circulaire, sur le plan,
répéter l'identification et le regroupement à un niveau immédiatement supérieur jusqu'à ce que soient trouvés les sommets pertinents pour une coque extérieure de l'objet.

14. Dispositif (202) pour générer les données pour une représentation tridimensionnelle ou tridimensionnelle d'au moins une partie d'un objet (100), avec:
une entrée qui est configurée pour recevoir une prise de vue 3D (100a, 100b) de la partie de l'objet (100);
un moteur 3D (206) qui est connecté à l'entrée et qui est configuré pour générer, à l'aide de la prise de vue 3D (100a, 100b) reçue, un modèle 3-D (208) de la partie de l'objet (100), et pour générer, à l'aide du modèle 3-D (208), des données qui décrivent les sommets de la partie de l'objet (100) dans l'espace tridimensionnel et les valeurs de couleur associées aux sommets; et
une sortie qui est connectée au moteur 3D (206) et qui est configurée pour fournir les données générées,
dans lequel le moteur 3D (206) est configuré pour générer le modèle 3D (208) et les données à une fréquence de répétition prédéterminée pour générer une pluralité de trames successives dans le temps qui contiennent, chacune, les données fournies et qui peuvent être affichées sous forme de séquence 3D,
dans lequel le moteur 3D (206) est configuré pour réduire la quantité de données sans perte de données, pour
déterminer les distances spatiales des valeurs de crête;
coder en forme de fuseau les distances spatiales sous forme de différences successives à partir d'un point de départ prédéterminé jusqu'à un point de fin, et
dans lequel le moteur 3D (206) est configuré pour réduire la quantité de données, pour
identifier, en commençant par un plan prédéterminé, par exemple un plan horizontal (plan X-Z), les sommets qui présentent une distance prédéterminée entre eux,
regrouper les points identifiés jusqu'à ce que soit trouvée une quantité de points, par exemple une quantité de points de forme circulaire, sur le plan,
répéter l'identification et le regroupement à un niveau immédiatement supérieur jusqu'à ce que soient trouvés les sommets pertinents pour une coque extérieure de l'objet.
